(19) Europäisches Patentamt
European Patent Office
Office européen des brevets

(11) Veröffentlichungsnummer : **0 458 743 A2**

# (12) EUROPÄISCHE PATENTANMELDUNG

(21) Anmeldenummer : **91810362.3**

(51) Int. Cl.$^5$ : **C09B 62/04**, D06P 1/382

(22) Anmeldetag : **10.05.91**

(30) Priorität : **21.05.90 CH 1715/90**

(43) Veröffentlichungstag der Anmeldung :
**27.11.91 Patentblatt 91/48**

(84) Benannte Vertragsstaaten :
**BE CH DE ES FR GB IT LI**

(71) Anmelder : **CIBA-GEIGY AG**
**Klybeckstrasse 141**
**CH-4002 Basel (CH)**

(72) Erfinder : **Tzikas, Athanassios, Dr.**
**Unt. Rütschetenweg 36**
**CH-4133 Pratteln (CH)**
Erfinder : **Seiler, Herbert, Dr.**
**Leimgrubenweg 60**
**CH-4125 Riehen (CH)**

## (54) Reaktivfarbstoffe, Verfahren zu deren Herstellung und deren Verwendung.

(57) Reaktivfarbstoffe der Formel

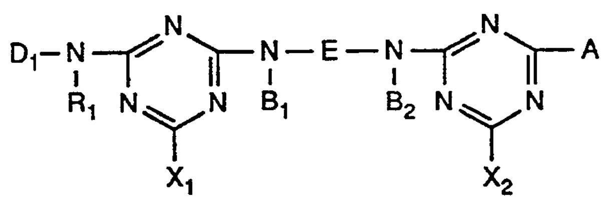

(1),

worin $D_1$, $R_1$, $B_1$, $B_2$, $X_1$, $X_2$, E und A die in Anspruch 1 angegebenen Bedeutungen haben, eignen sich besonders zum Färben oder Bedrucken von cellulosehaltigen Fasermaterialien nach dem Ausziehverfahren oder nach Kontinueverfahren und geben, bei hoher färberischer Ausbeute, Färbungen und Drucke mit guten Echtheitseigenschaften.

EP 0 458 743 A2

Jouve, 18, rue Saint-Denis, 75001 PARIS

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

Gegenstand der Erfindung sind Reaktivfarbstoffe der Formel

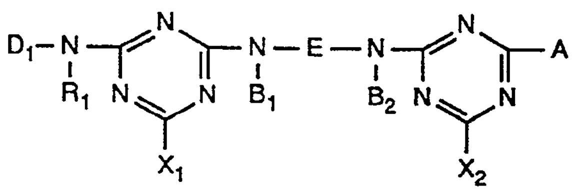 (1),

worin $D_1$ der Rest eines Monoazo-, Polyazo-, Metallkomplexazo-, Anthrachinon-, Phthalocyanin-, Formazan-, Azomethin-, Dioxazin-, Phenazin-, Stilben-, Triphenyl-methan-, Xanthen-, Thioxanthon-, Nitroaryl-, Naphthochinon-, Pyrenchinon- oder Perylentetracarbimid-Farbstoffes; $R_1$, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; $X_1$ und $X_2$ unabhängig voneinander Fluor, Chlor, Brom, Sulfo, $C_1$-$C_4$-Alkyl-sulfonyl, Phenylsulfonyl oder Carboxypyridinium, E ein Rest der Formel

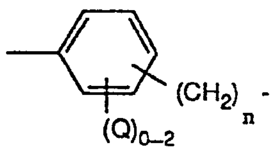 (1a) oder 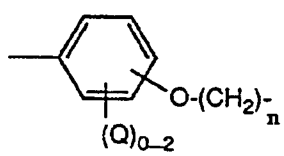 (1b)

und n die Zahl 1, 2, 3, 4 oder 5 ist, $(Q)_{0-2}$ für 0 bis 2 Substituenten Q, unabhängig voneinander, aus der Gruppe $C_1$-$C_4$-Alkyl, $C_1$-$C_4$-Alkoxy, Halogen, Carboxy und Sulfo steht, und A ein Rest der Formel

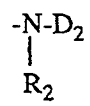 (1c)

ist, worin $D_2$ und $R_2$ die gleichen Bedeutungen wie $D_1$ und $R_1$, unabhängig von diesen, haben, oder ein Rest der Formel

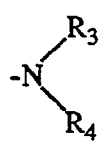 (1d)

ist, worin $R_3$ und $R_4$ unabhängig voneinander Wasserstoff, einen gegebenenfalls substituierten $C_1$-$C_8$-Alkyl-, $C_5$-$C_7$-Cycloalkyl-, Phenyl- oder Naphthyl-Rest oder einen 5-oder 6-gliedrigen heterocyclischen Rest bedeuten, oder $R_3$ und $R_4$ zusammen mit dem sie verbindenden Stickstoffatom, gegebenenfalls unter Einschluss eines weiteren Heteroatoms einen stickstoffhaltigen heterocyclischen Ring bilden.

Der Rest $D_1$ in Formel (1) bzw. $D_2$ in Formel (1c) kann an seinem Grundgerüst die bei organischen Farbstoffen üblichen Substituenten gebunden enthalten.

Als Beispiele für weitere Substituenten im Rest $D_1$ bzw. $D_2$ seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, insbesondere Alkanoylamino-gruppen, wie Acetylamino, Propionylamino oder Benzoylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Vorzugsweise enthält der Rest $D_1$ bzw. $D_2$ eine oder mehrere Sulfonsäuregruppen. Reaktivfarbstoffe der Formel (1), worin $D_1$ bzw. $D_2$ der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest $R_1$, $R_2$, $B_1$ bzw. $B_2$ ist, falls es sich um einen Alkylrest handelt, geradkettig oder verzweigt; er kann weitersubstituiert sein, z.B. durch Halogen, Hydroxy, Cyan, $C_1$-$C_4$-Alkoxy, $C_1$-$C_4$-Alkoxycarbonyl, Carboxy, Sulfamoyl, Sulfo oder Sulfato. Als Beispiele für $R_1$, $R_2$, $B_1$ und $B_2$ seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl und β-Sulfatoethyl. Vorzugsweise sind $R_1$, $R_2$, $B_1$ und $B_2$ unabhängig voneinander Wasserstoff, Methyl oder Ethyl.

Die Reste $X_1$ und $X_2$ bedeuten unabhängig voneinander Fluor, Chlor oder Brom, $C_1$-$C_4$-Alkylsulfonyl, wie Methylsulfonyl oder Ethylsulfonyl, Phenylsulfonyl, Carboxy-pyridinium oder eine Sulfogruppe. Vorzugsweise ist $X_1$ und $X_2$ Fluor oder Chlor.

$R_3$ und $R_4$ als $C_1$-$C_8$-Alkyl sind z.B. Methyl, Ethyl, Propyl, Isopropyl, Butyl, Isobutyl, sek.-Butyl, tert.-Butyl, n-Pentyl, n-Hexyl oder n-Octyl. Die $C_1$-$C_8$-Alkylreste $R_3$ und $R_4$ können substituiert sein, z.B. durch Halogen, Hydroxy, Cyan, Carboxy, $C_1$-$C_4$-Alkoxy, Hydroxy-$C_2$-$C_4$-alkoxy, Sulfo, Sulfato, Phenyl und Naphthyl, wobei der Phenyl- oder Naphthylrest weitersubstituiert sein kann, z.B. wie für $D_1$ oder $D_2$ angegeben. Als Beispiele seien genannt: β-Carboxyethyl, β-Cyanethyl, Sulfomethyl, β-Sulfoethyl, Benzyl, Phenethyl.

Als $C_5$-$C_7$-Cycloalkyl kommt für $R_3$ und $R_4$ der Cyclopentyl-, Cyclohexyl- oder Cycloheptyl-Rest in Betracht, der weitersubstituiert sein kann z.B. durch $C_1$-$C_4$-Alkyl. Als Beispiele seien genannt: Cyclopentyl, Cyclohexyl, 4-Methylcyclohexyl, Cycloheptyl.

Als Phenyl oder Naphthyl kommen für $R_3$ und $R_4$ die unsubstituierten Reste sowie die z.B. durch $C_1$-$C_4$-Alkyl, wie z.B. Methyl, Ethyl, n-Propyl, Isopropyl, n-Butyl, $C_1$-$C_4$-Alkoxy, wie z.B. Methoxy oder Ethoxy, Halogen, wie z.B. Fluor, Chlor oder Brom, Carboxy, Hydroxy oder Sulfo substituierte Phenyl- oder Naphthylreste in Betracht.

Als $C_1$-$C_4$-Alkyl kommt für Q z.B. in Betracht: Methyl, Ethyl, n-Propyl, Isopropyl und n-Butyl.

Als $C_1$-$C_4$-Alkoxy kommt für Q z.B. in Betracht: Methoxy, Ethoxy, n-Propoxy, Isopropoxy, n-Butoxy.

Als Halogen kommt für Q z.B. in Betracht: Fluor, Brom und insbesondere Chlor.

Ferner sind in Betracht zu ziehen, Reaktivfarbstoffe der Formel (1), worin der Rest $D_1$ bzw. $D_2$ noch einen weiteren Reaktivrest einschliesst. Die zusätzlichen, in $D_1$ bzw. $D_2$ eingeschlossenen Reaktivreste können über Aminogruppen oder in anderer Weise, z.B. durch eine direkte Bindung an $D_1$ bzw. $D_2$ gebunden sein.

Ein gegebenenfalls in $D_1$ oder $D_2$ eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe gebundener, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Wichtige Strukturvarianten, welche sich aus der alternativen Definition von A in Formel (1) ergeben, sind: Reaktivfarbstoffe der Formel

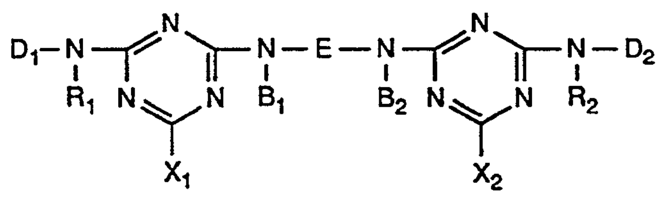

(1e),

worin $D_1$, $D_2$, $R_1$, $R_2$, $B_1$, $B_2$, $X_1$, $X_2$ und E die unter Formel (1) angegebenen Bedeutungen haben;

Reaktivfarbstoffe der Formel

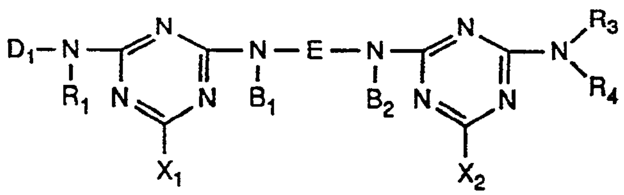 (1f),

worin $D_1$, $R_1$, $B_1$, $B_2$, $X_1$, $X_2$, E, $R_3$ und $R_4$ die unter Formel (1) angegebenen Bedeutungen haben

Bevorzugte Ausführungsformen der Reaktivfarbstoffe der Formel (1) sind:

a) Reaktivfarbstoffe der Formeln (1e) und (1f), worin $X_1$ und $X_2$ unabhängig voneinander Fluor, Chlor oder Carboxypyridinium, insbesondere Fluor oder Chlor ist.

b) Reaktivfarbstoffe der Formeln (1e) und (1f), worin $B_1$ und $B_2$ je ein Wasserstoffatom ist.

c) Reaktivfarbstoffe der Formeln (1e) und (1f), worin E ein Rest der Formel (1a) oder (1b) ist, worin n die Zahl 1 oder 2 und Q Sulfo ist.

d) Reaktivfarbstoffe der Formel (1) bzw. der Formeln (1e) und (1f), worin E ein Rest der Formel (1a) ist.

e) Reaktivfarbstoffe der Formel (1) bzw. der Formeln (1e) und (1f), worin E ein Rest der Formel (1b) ist.

Besonders bevorzugte Ausführungsformen der Reaktivfarbstoffe der Formel (1) sind:

f) Reaktivfarbstoffe der Formel (1e), worin $X_1$ und $X_2$ Fluor oder Chlor ist; $B_1$ und $B_2$ je ein Wasserstoffatom ist; E ein Rest der Formel (1a) oder (1b), worin n die Zahl 1 oder 2 und Q Sulfo ist.

g) Reaktivfarbstoffe gemäss c) der Formel (1e), worin E ein Rest der Formel (1a), n die Zahl 1 oder 2 und Q Sulfo ist.

h) Reaktivfarbstoffe gemäss c) der Formel (1e), worin E ein Rest der Formel (1b), n die Zahl 2 und Q Sulfo ist, wobei Q in ortho-Stellung zu der $-O-(CH_2)_2-NH-$ Gruppe gebunden ist.

i) Reaktivfarbstoffe gemäss a), b), c), f), g) oder h), worin $D_1$ die gleiche Bedeutung wie $D_2$ und $R_1$ die gleiche Bedeutung wie $R_2$ hat.

j) Reaktivfarbstoffe gemäss i), worin $D_1$ und $D_2$ je ein Azo-, Metallkomplexazo- oder Formazanfarbstoffrest ist.

k) Reaktivfarbstoffe gemäss j), worin $R_1$ und $R_2$ Wasserstoff, Methyl oder Ethyl ist.

Ebenfalls besonders bevorzugte Ausführungsformen der Reaktivfarbstoffe der Formel (1) sind:

l) Reaktivfarbstoffe der Formel (1f), worin $X_1$ und $X_2$ Fluor oder Chlor ist; $B_1$ und $B_2$ je ein Wasserstoffatom ist; E ein Rest der Formel (1a) oder (1b) ist, worin n die Zahl 1 oder 2 und Q Sulfo ist.

m) Reaktivfarbstoffe gemäss 1) der Formel (1f), worin E ein Rest der Formel (1a), n die Zahl 1 oder 2 und Q Sulfo ist.

n) Reaktivfarbstoffe gemäss 1) der Formel (1f), worin E ein Rest der Formel (Ib), n die Zahl 2 und Q Sulfo ist, wobei Q in ortho-Stellung zu der $-O-(CH_2)_2-NH-$ Gruppe gebunden ist.

o) Reaktivfarbstoffe gemäss a), b), c), l), m) oder n), worin $R_3$ und $R_4$ unabhängig voneinander Wasserstoff oder $C_1$-$C_8$-Alkyl, das durch Hydroxy, $C_1$-$C_4$-Alkoxy, Hydroxy-$C_2$-$C_4$-alkoxy, $C_1$-$C_4$-Alkoxycarbonyl, $C_1$-$C_4$-Alkylcarbonyloxy, Carboxy, Cyan, Halogen, Sulfo oder Sulfato substituiert sein kann, bedeuten; oder worin $R_3$ Wasserstoff und $R_4$ Benzyl oder Phenethyl, das im Phenylring durch Sulfo substituiert sein kann, ist; oder worin $R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder worin $R_3$ Wasserstoff und $R_4$ Naphthyl, das durch Hydroxy oder Sulfo substituiert sein kann, ist; oder worin der Rest

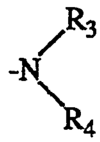 :

Morpholino, Piperidino oder Piperazino ist.

p) Reaktivfarbstoffe gemäss o), worin $D_1$ der Rest eines Azo-, Metallkomplexazo- oder Formazanfarbstoffes ist.

q) Reaktivfarbstoffe gemäss p), worin $R_1$ Wasserstoff, Methyl oder Ethyl ist.

Ganz besonders bevorzugt sind Reaktivfarbstoffe gemäss a) bis k) der Formel

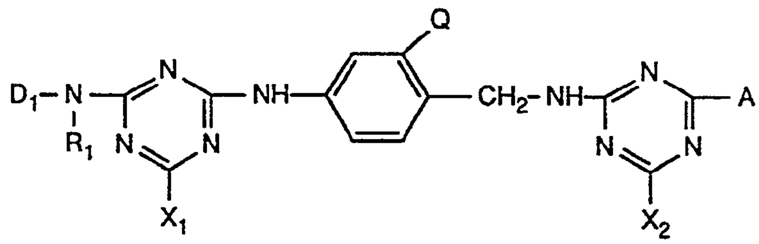

(2a) oder

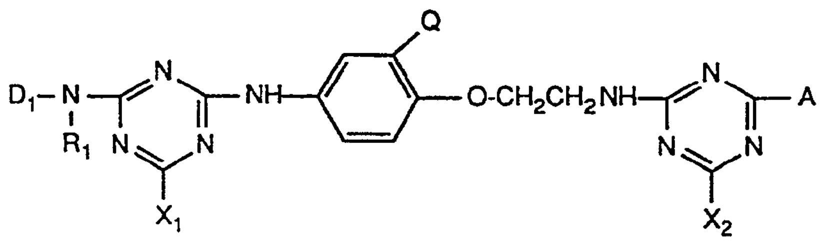

(2b)

worin A ein Rest der Formel

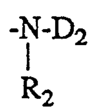

(1c),

$D_1$ und $D_2$ unabhängig voneinander je ein Rest eines Monoazo- oder Formazanfarbstoffes, $R_1$ und $R_2$ unabhängig voneinander Wasserstoff, Methyl oder Ethyl, $X_1$ und $X_2$ unabhängig voneinander Fluor oder Chlor und Q Wasserstoff oder Sulfo ist, insbesondere Reaktivfarbstoffe, worin $D_1$ und $D_2$ in Formeln (2a) oder (2b) identische Bedeutungen haben und $R_1$ und $R_2$ in Formeln (2a) oder (2b) identische Bedeutungen haben.

Ebenfalls ganz besonders bevorzugt sind Reaktivfarbstoffe gemäss a) bis e) und l) bis q) der Formel

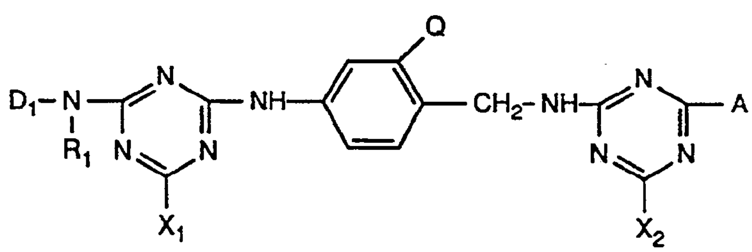

(2a),

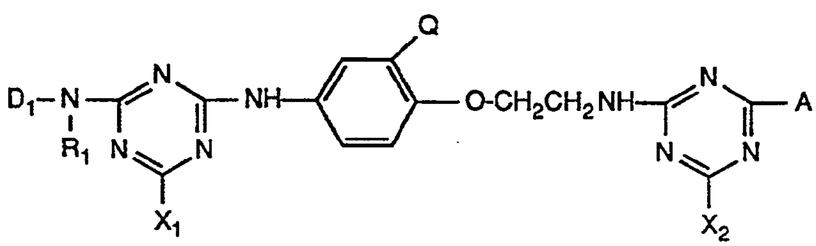

(2b)

oder

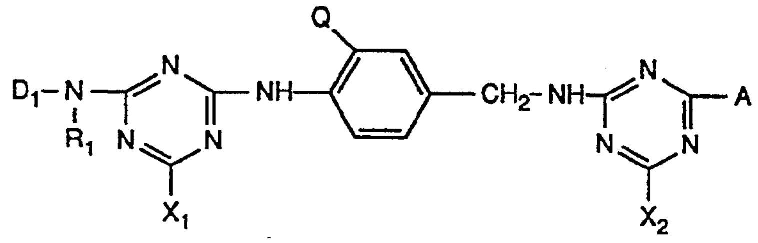

(2c),

worin $D_1$ der Rest eines Monoazo- oder Formazanfarbstoffes, $R_1$ Wasserstoff, Methyl oder Ethyl und A ein Rest der Formel

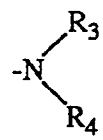

(1d),

worin $R_3$ und $R_4$ die unter Formel (1) angegebenen Bedeutungen haben, ist, und $X_1$ und $X_2$ unabhängig voneinander Fluor oder Chlor und Q Wasserstoff oder Sulfo ist; insbesondere worin $R_3$ und $R_4$ unabhängig voneinander Wasserstoff oder $C_1$-$C_6$-Alkyl, das durch Hydroxy, $C_1$-$C_4$-Alkoxy, Hydroxy-$C_2$-$C_4$-alkoxy, $C_1$-$C_4$-Alkoxycarbonyl, $C_1$-$C_4$-Alkyl-carbonyloxy, Carboxy, Cyan, Halogen, Sulfo oder Sulfato substituiert sein kann, bedeuten, oder

worin $R_3$ Wasserstoff und $R_4$ Benzyl oder Phenethyl, das im Phenylring durch Sulfo substituiert sein kann, ist, oder

worin $R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder

worin $R_3$ Wasserstoff und $R_4$ Naphthyl, das durch Hydroxy oder Sulfo substituiert sein kann, ist, oder worin der Rest der Formel

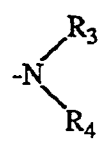

Morpholino, Piperidino oder Piperazino ist.

Besonders wichtig sind Reaktivfarbstoffe der Formeln (2a), (2b) und (2c), worin A ein Rest der Formel (1c) oder (1d) ist, und worin

a') $D_1$, oder $D_1$ und $D_2$, je ein Rest eines Formazanfarbstoffes der Formel

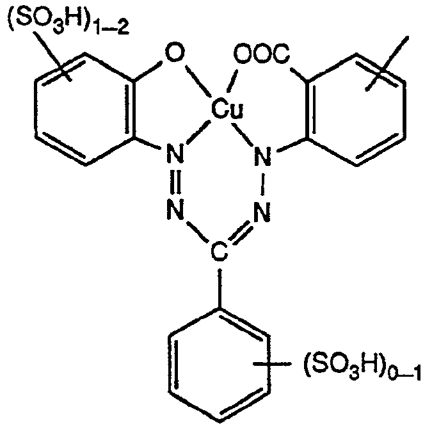

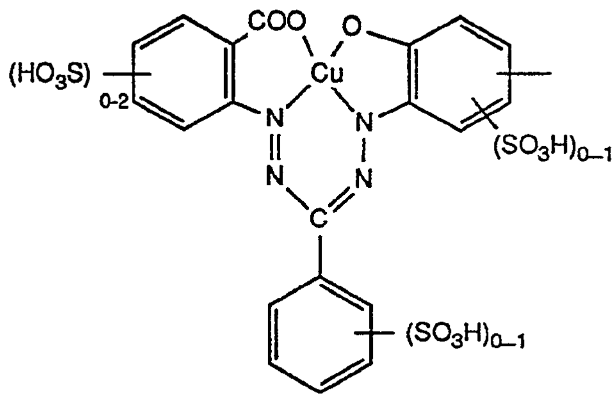

(3a) oder (3b),

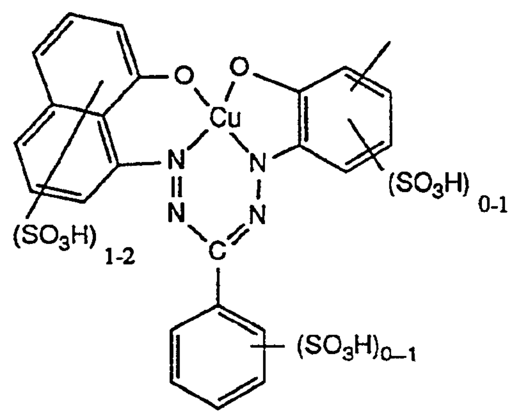

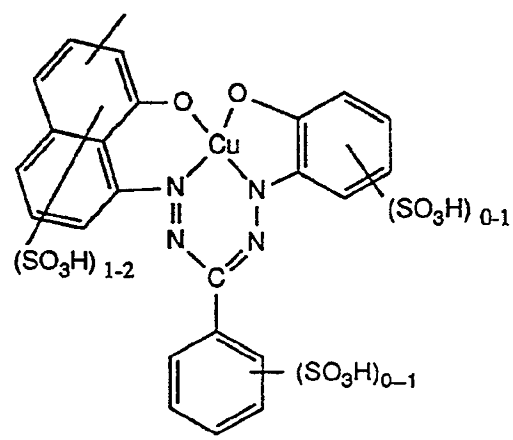

(3c) oder (3d)

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

b') $D_1$, oder $D_1$ und $D_2$, der Rest eines Anthrachinonfarbstoffes der Formel

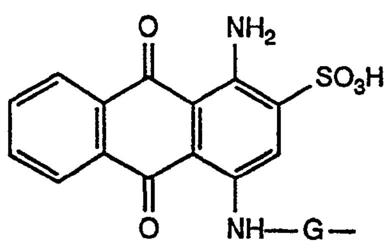

(4)

ist, worin G ein Phenylen-, Cyclohexylen-, Phenylenmethylen- oder $C_2$-$C_6$-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

c') $D_1$, oder $D_1$ und $D_2$, der Rest eines Phthalocyaninfarbstoffes der Formel

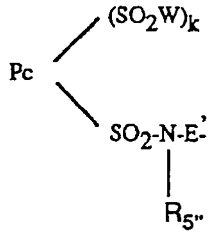

(5)

ist, worin Pc der Rest eines Kupfer- oder Nickelphthalocyanins; W -OH und/oder $-NR_5R_{5'}$; $R_5$ und $R_{5'}$ unabhängig voneinander Wasserstoff oder Alkyl mit 1 bis 4 Kohlenstoffatomen, das durch Hydroxy oder Sulfo substituiert sein kann; $R_{5''}$ Wasserstoff oder Alkyl mit 1 bis 4 Kohlenstoffatomen; E′ ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.

d′) $D_1$, oder $D_1$ und $D_2$, der Rest eines Dioxazinfarbstoffes der Formel

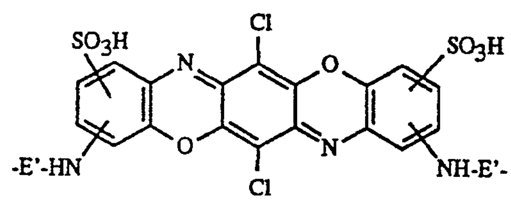

(6a)

oder

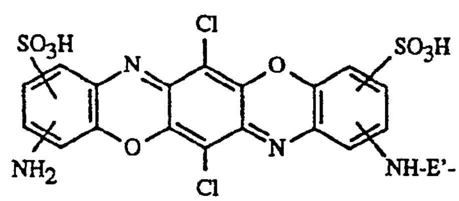

(6b)

oder

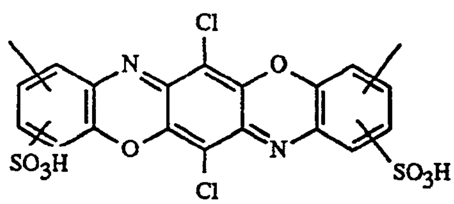

(6c)

ist, worin E′ ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (6a), (6b) und (6c) durch Alkyl mit 1 bis 4 C-Atomen, Alkoxy mit 1 bis 4 C-Atomen, Acetylamino, Nitro, Halogen, Carboxy, Sulfo oder $-SO_2-Z'$ weitersubstituiert sein können, wobei Z′ β-Sulfatoethyl, β-Thiosulfatoethyl, β-Phosphatoethyl, β-Acyloxyethyl, β-Halogenethyl oder Vinyl ist.

Interessant sind ferner Reaktivfarbstoffe, worin $D_1$, oder $D_1$ und $D_2$, ein Mono- oder Disazofarbstoffrest der Formel

$$D1'-N=N-(M-N=N)_u-K- \quad (7a),$$

$$-D1'-N=N-(M-N=N)_u-K \quad (7b)$$

oder

$$-D1'-N=N-(M-N=N)_u-K- \quad (7c),$$

oder eines davon abgeleiteten Metallkomplexes ist; $D_1'$ der Rest einer Diazokomponente der Benzol- oder Naphthalinreihe, M der Rest einer Mittelkomponente der Benzol- oder Naphthalinreihe, und K der Rest einer

Kupplungskomponente der Benzol-, Naphthalin-, Pyrazolon-, 6-Hydroxypyridon-(2)- oder Acetessigsäurearylamid-Reihe ist, wobei $D_1'$, M und K, die bei Azofarbstoffen üblichen Substituenten tragen können, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest $-SO_2-Z'$, wobei Z' die angegebene Bedeutung hat; u = 0 oder 1 ist; und $D_1'$, M und K zusammen mindestens zwei Sulfogruppen, vorzugsweise drei oder vier Sulfogruppen, enthalten.

Ebenfalls interessant sind Reaktivfarbstoffe, worin $D_1$, oder $D_1$ und $D_2$, ein Disazofarbstoffrest der Formel

$$-D_1'-N=N-K'-N=N-D_2' \qquad (8a),$$

oder

$$-D_1'-N=N-K'-N=N-D_2'- \qquad (8b)$$

ist, worin $D_1'$ und $D_2'$ unabhängig voneinander der Rest einer Diazokomponente der Benzol- oder Naphthalinreihe, und K' der Rest einer Kupplungskomponente der Naphthalinreihe ist; wobei $D_1'$, $D_2'$ und K' bei Azofarbstoffen übliche Substituenten tragen können, insbesondere Hydroxy-, Amino-, Methyl, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest $-SO_2-Z'$, wobei Z' die angegebene Bedeutung hat, und $D_1'$, $D_2'$ und K'zusammen mindestens zwei Sulfogruppen, vorzugsweise drei oder vier Sulfogruppen enthalten.

Von den interessanten Reaktivfarbstoffen der Formeln (7a), (7b), (7c), (8a) und (8b) sind besonders wichtig die Farbstoffe, worin $D_1$, oder $D_1$ und $D_2$, einen Farbstoffrest der nachfolgenden Formeln (9) und (11) bis (21) bedeutet:

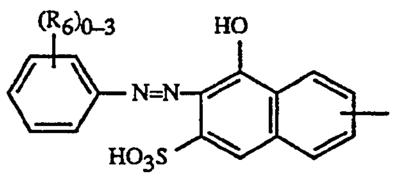

(9a)

oder

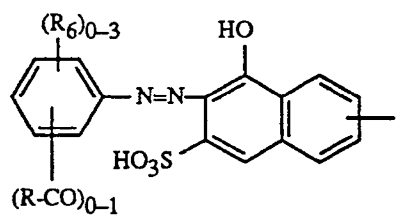

(9b),

worin $R_6$ für $C_1$-$C_4$-Alkyl, $C_1$-$C_4$-Alkoxy, Halogen, $-SO_2-Z'$, Carboxy oder Sulfo steht; und Z' β-Sulfatoethyl, β-Thiosulfatoethyl, β-Phosphatoethyl, β-Acyloxyethyl, β-Halogenethyl oder Vinyl ist, und R ein Rest der Formel

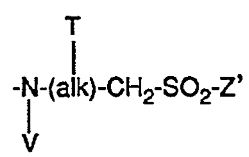

(10a),

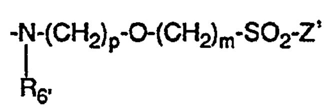

(10b),

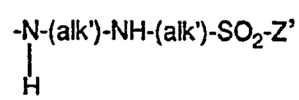

(10c),

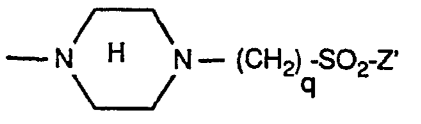

(10d),

Z' β-Sulfatoethyl, β-Thiosulfatoethyl, β-Acyloxyethyl, β-Halogenethyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z'$, worin Z' die oben angegebene Bedeutung hat; $R_{6'}$ Wasserstoff oder $C_1$-$C_6$-Alkyl; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

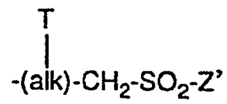

(10e),

worin Z', alk und T die angegebenen Bedeutungen haben; alk' unabhängig voneinander Polymethylenreste mit 2 bis 6 C-Atomen oder deren verzweigte Isomere; und m = 1 bis 6, p = 1 bis 6 und q = 1 bis 6 ist; als β-Halogenethyl kommt für Z' insbesondere der β-Chlorethylrest und als β-Acyloxyethyl insbesondere der β-Acetoxyethylrest in Betracht. Der Alkylenrest alk ist vorzugsweise Methylen, Ethylen, Methylmethylen, Propylen oder Butylen. Der Substituent T ist als Acyloxrest insbesondere Acetyloxy, Propionyloxy oder Butyryloxy, und als Alkoxycarbonylrest insbesondere Methoxycarbonyl, Ethoxycarbonyl oder Propyloxycarbonyl. Falls V ein Alkylrest ist, kann dieser Methyl, Ethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Ethyl-, N,N-Dimethyl- und N,N-Diethylcarbamoyl, Cyan, Acetyl, Propionyl, Butyryl, Methoxycarbonyl, Ethoxycarbonyl, Propyloxycarbonyl, Sulfamoyl, N-Methyl-, N-Ethyl-, N,N-Dimethyl- und N,N-Diethylsulfamoyl, Methylsulfonyl, Ethylsulfonyl und Propylsulfonyl. Der Rest $R_{6'}$ ist beispielsweise Methyl, Ethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Ethylen, Propylen oder Butylen. Die Indizes m, p und q sind unabhängig voneinander und vorzugsweise 2, 3 oder 4.

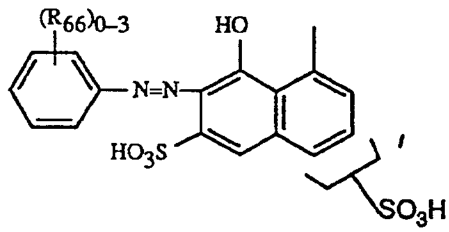

(11a)

oder

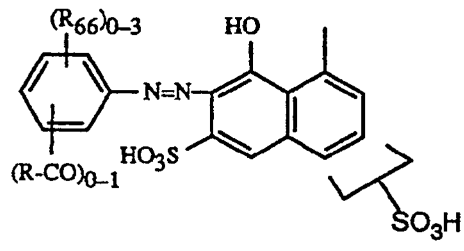

(11b),

worin $R_{66}$ für $C_1$-$C_4$-Alkyl, $C_1$-$C_4$-Alkoxy, Halogen, $-SO_2-Z'$, Carboxy, Sulfo und $C_1$-$C_4$-Alkoxyanilino steht; und Z' β-Sulfatoethyl, β-Thiosulfatoethyl, β-Phosphatoethyl, β-Acyloxyethyl, β-Halogenethyl oder Vinyl ist, und R die unter Formeln (10a) bis (10e) angegebene Bedeutung hat.

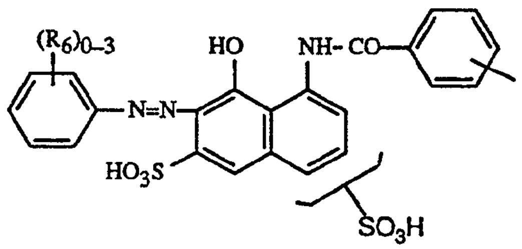

(12),

worin $R_6$ für $C_1$-$C_4$-Alkyl, $C_1$-$C_4$-Alkoxy, Halogen, $-SO_2$-Z′, Carboxy oder Sulfo steht; und Z′ β-Sulfatoethyl, β-Thiosulfatoethyl, β-Phosphatoethyl, β-Acyloxyethyl, β-Halogenethyl oder Vinyl ist.

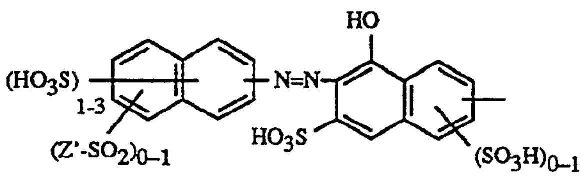

(13)

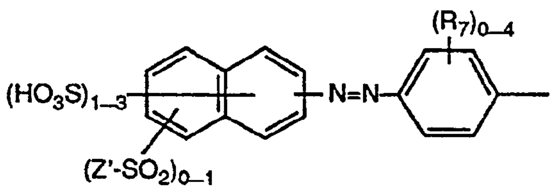

(14a)

oder

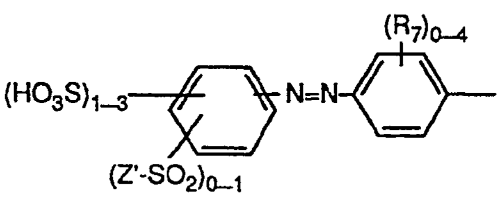

(14b)

oder

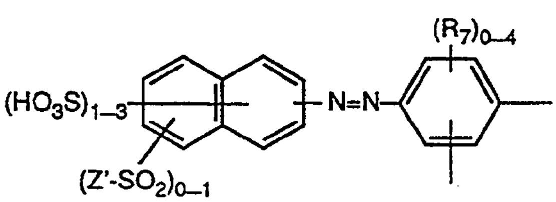

(14c)

oder

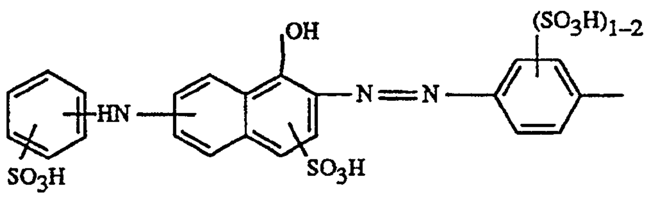

(14d),

worin $R_7$ für Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht; und Z′ β-Sulfatoethyl, β-Thiosulfatoethyl, β-Phosphatoethyl, β-Acyloxyethyl, β-Halogenethyl oder Vinyl ist.

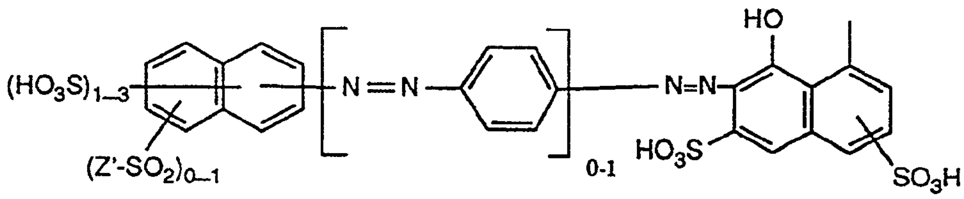

(15)

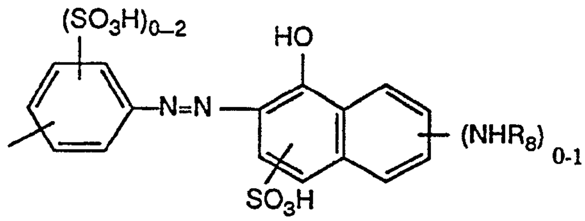

(16a)

oder

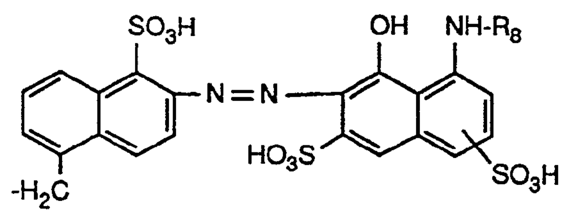

(16b),

worin $R_8$ $C_1$-$C_4$-Alkanoyl oder Benzoyl ist; und Z′ β-Sulfatoethyl, β-Thiosulfatoethyl, β-Phosphatoethyl, β-Acyloxyethyl, β-Halogenethyl oder Vinyl ist.

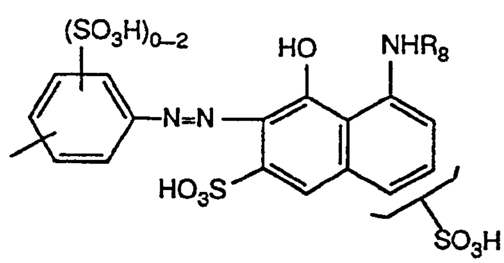

(17),

worin $R_8$ $C_1$-$C_4$-Alkanoyl oder Benzoyl ist.

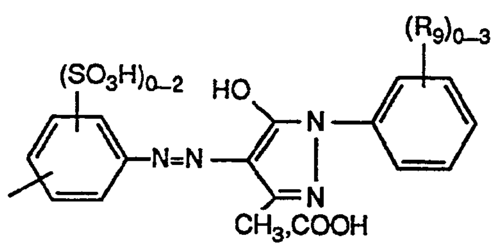

(18),

worin $R_9$ für $C_1$-$C_4$-Alkyl, $C_1$-$C_4$-Alkoxy, Halogen, -$SO_2$-Z′, Carboxy und Sulfo steht; und Z′ β-Sulfatoethyl, β-Thiosulfatoethyl, β-Phosphatoethyl, β-Acyloxyethyl, β-Halogenethyl oder Vinyl ist.

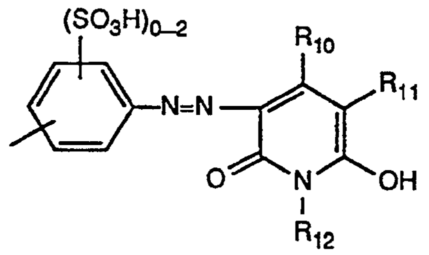

(19),

worin $R_{12}$ und $R_{10}$ unabhängig voneinander Wasserstoff, $C_1$-$C_4$-Alkyl oder Phenyl, und $R_{11}$ Wasserstoff, Cyano, Carbamoyl oder Sulfomethyl ist.

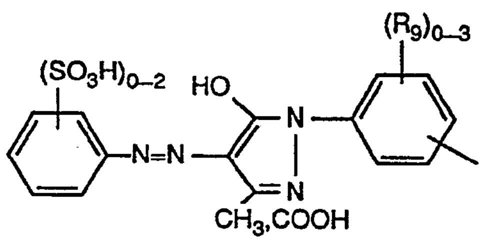

(20),

worin $R_9$ für $C_1$-$C_4$-Alkyl, $C_1$-$C_4$-Alkoxy, Halogen, $-SO_2$-Z', Carboxy und Sulfo steht; und Z' β-Sulfatoethyl, β-Thiosulfatoethyl, β-Phosphatoethyl, β-Acyloxyethyl, β-Halogenethyl oder Vinyl ist.

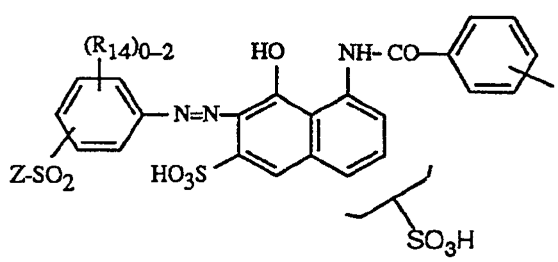

(21),

worin $R_{14}$ für $C_1$-$C_4$-Alkyl, $C_1$-$C_4$-Alkoxy, Halogen, Carboxy und Sulfo steht; und Z' β-Sulfatoethyl, β-Thiosulfatoethyl, β-Phosphatoethyl, β-Acyloxyethyl, β-Halogenethyl oder Vinyl ist,

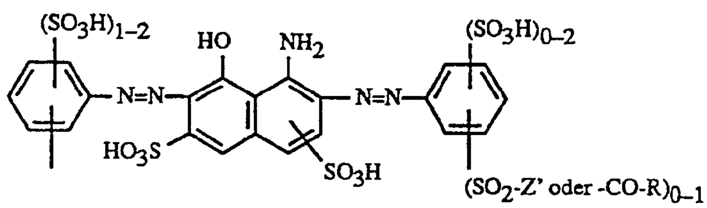

(21a)

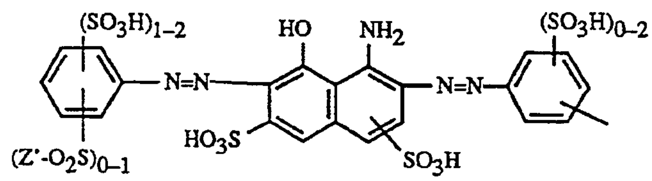

(21b)

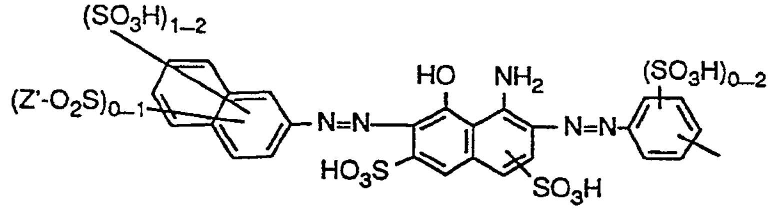

(21c)

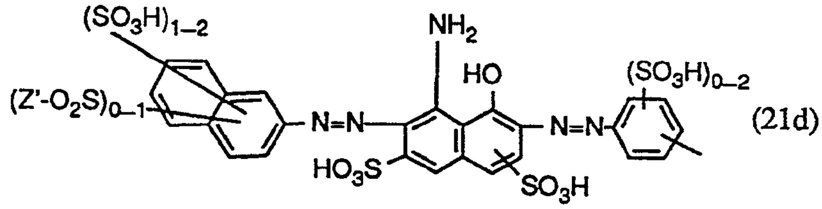

(21d)

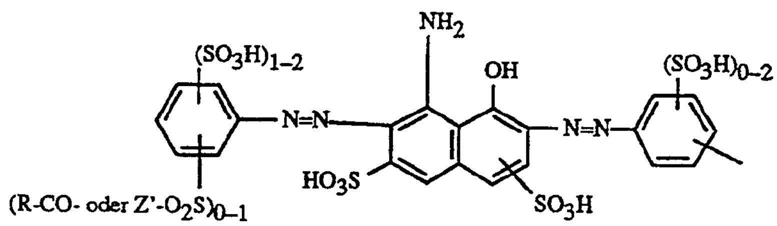

(21e)

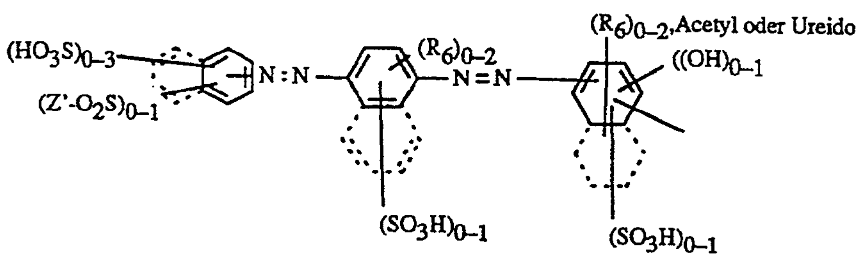

(21f),

worin $R_6$ und Z' die unter Formel (9b) angegebenen Bedeutungen haben, und R die unter Formel (10a) bis (10d) angegebene Bedeutung hat.

Besonders wichtig sind ausserdem Schwermetallkomplexe von Reaktivfarbstoffen der Formeln (1); als komplexbildende Schwermetalle kommen vor allem Kupfer, Nickel, Kobalt oder Chrom in Betracht. Bevorzugt sind Kupferkomplexazofarbstoffe, insbesondere solche der Formeln (9) und (11) bis (21), die das Kupferatom über ein Sauerstoffatom je in ortho-Position zur Azobrücke gebunden enthalten.

Beispiele für Azofarbstoffe, die sich als Metallkomplexe eignen sind:

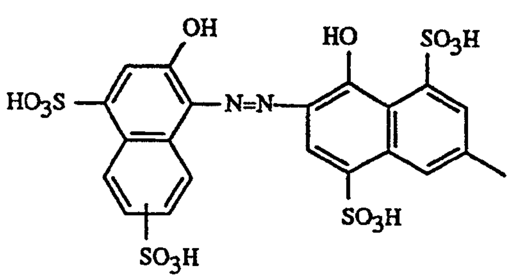

(22),

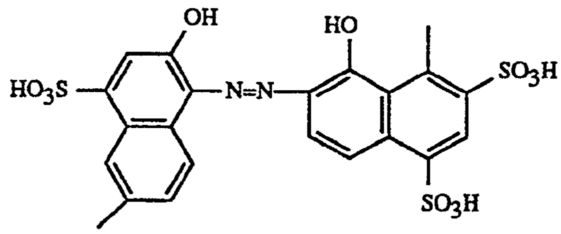

(23),

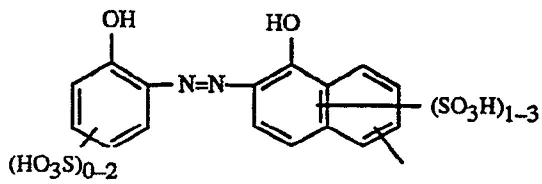

(24),

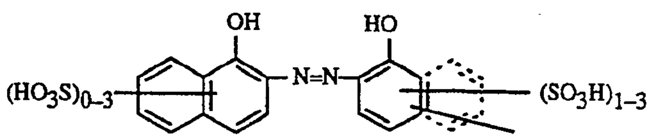

(25),

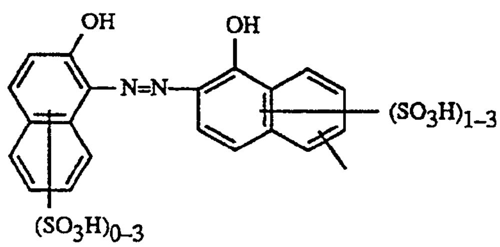

(26),

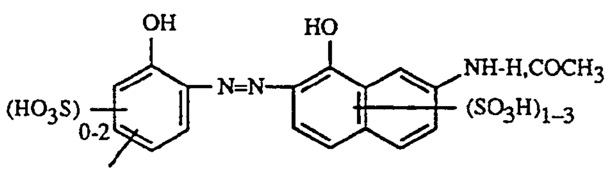

(27a)

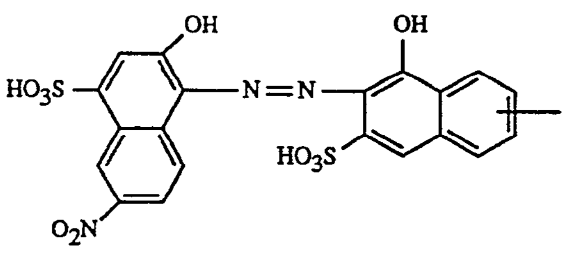

(27b)

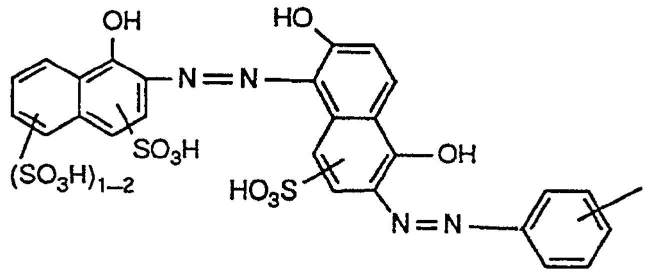

(27c).

Als Metallatome sind Cu (1:1-Komplex) oder Cr und Co (1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B

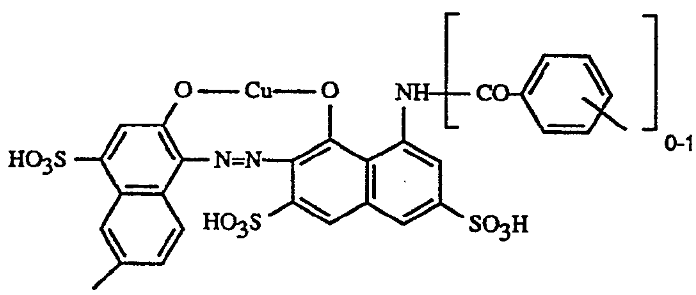

(28)

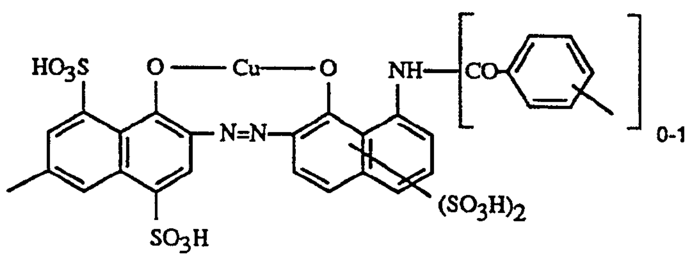

(29a)

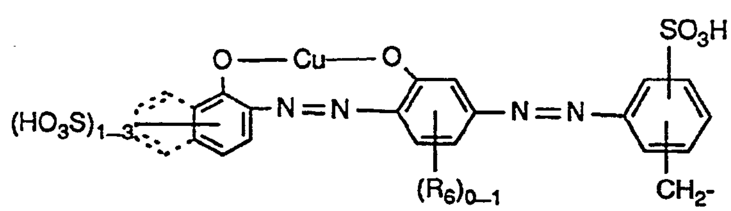

(29b)

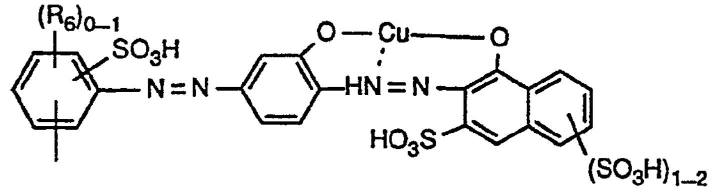

(29c),

worin $R_6$ die unter Formel (9) angegebene Bedeutung hat.

Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Die Reaktivfarbstoffe der Formel (1) können hergestellt werden, indem man einen organischen Farbstoff der Formel

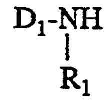 (30)

oder ein Farbstoffvorprodukt, je ein Äquivalent der s-Triazine der Formeln

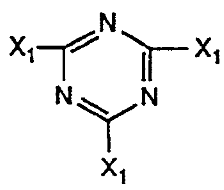 (31) und 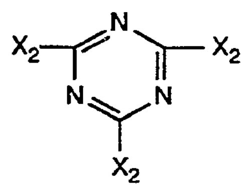 (32),

ein Äquivalent eines Diamins der Formel

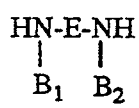 (33)

und ein Äquivalent eines Amins der Formel

H-A (34)

in beliebiger Reihenfolge miteinander umsetzt, wobei $D_1$, $R_1$, $X_1$, $X_2$, $B_1$, $B_2$, E und A die unter Formel (1) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der Umsetzungen zwischen den einzelnen Reaktionskomponenten vorteilhafterweise sich nach den besonderen Bedingungen richtet.

Eine wichtige Ausführungsform des erfindungsgemässen Verfahrens ist dadurch gekennzeichnet, dass man einen organischen Farbstoff der Formel

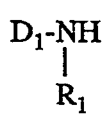 (30)

zunächst mit einem s-Triazin der Formel

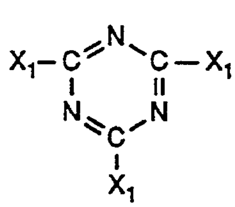 (31)

kondensiert, und die erhaltene Verbindung der Formel

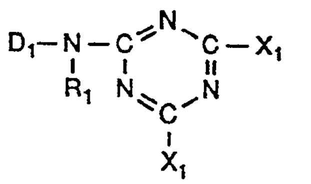

(35)

mit einem Diamin der Formel (33) kondensiert, anschliessend das Kondensationsprodukt mit einem s-Triazin der Formel (32) kondensiert, und zuletzt das Umsetzungsprodukt mit einem Amin der Formel (34) kondensiert.

Eine weitere Ausführungsform des erfindungsgemässen Verfahrens ist dadurch gekennzeichnet, dass man einen organischen Farbstoff der Formel (30) mit einem s-Triazin der Formel (31) kondensiert, die erhaltene Verbindung der Formel

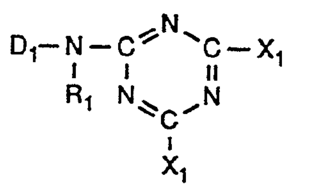

(35)

im molaren Verhältnis 2:1 mit einem Diamin der Formel (33) kondensiert, so dass ein Farbstoff der Formel (1) erhalten wird, worin $X_1$ die gleiche Bedeutung wie $X_2$ hat, A ein Rest der Formel (1c) ist, und $D_1$ die gleiche Bedeutung wie $D_2$ hat und $R_1$ die gleiche Bedeutung wie $R_2$ hat.

Nach einer abgeänderten Ausführungsform des erfindungsgemässen Verfahrens können Reaktivfarbstoffe der Formel (1) auch hergestellt werden, indem man eine Komponente des Farbstoffes der Formel (30), die einen Rest der Formel

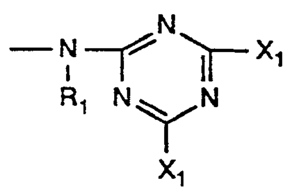

(36)

enthält, mit einer zur Herstellung des Farbstoffes benötigten zweiten Komponente umsetzt, und den so erhaltenen Farbstoff der Formel

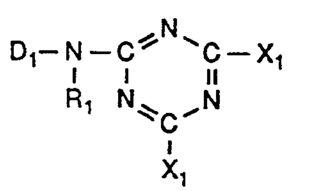

(35)

mit einem Diamin der Formel (33), einem weiteren s-Triazin der Formel (32) und einem Amin der Formel (34) umsetzt.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (33) dem Triazin der Formel (31) und dem Farbstoff der Formel (30) oder einem Vorprodukt zweckmässigerweise zuerst ausgeführt wird, die des Triazins mit der Verbindung der Formel (33) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Gegebenenfalls ist eine Ausführungsform anwendbar, bei welcher man von Farbstoffvorprodukten ausgeht. Diese Ausführungsform ist geeignet zur Herstellung von Reaktivfarbstoffen der Formel (1), worin $D_1$ oder $D_2$ der Rest eines aus zwei oder mehr als zwei Komponenten zusammengesetzten Farbstoffes ist, beispielsweise eines Monoazo-, Disazo-, Trisazo- oder Metallkomplexazofarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin $D_1$, oder $D_1$ und $D_2$, je der Rest eines Monoazofarbstoffes, eines Metallkomplexazofarbstoffes oder eines Formazanfarbstoffes ist. In diesem Falle ist der faserreaktive Teil der Farbstoffe der Formel (1) an eine Diazokomponente oder Kupplungskomponente von $D_1$ bzw. $D_2$ gebunden.

Falls man von Farbstoffvorprodukten ausgeht, gelangt man zu den Reaktivfarbstoffen der Formel (1), indem man z.B. eine Komponente des Farbstoffes der Formel (30), die eine Gruppe $-N(R_1)H$ enthält, und ein Triazin der Formel (31) kondensiert, vorher oder nachher mit einer Verbindung der Formel (33) kondensiert, dann mit dem Triazin der Formel (32) und vorher oder nachher mit der Verbindung der Formel (34) umsetzt. Bei der Herstellung der bevorzugten Azofarbstoffe müssen die Diazokomponenten und die Kupplungskomponenten zusammen mindestens eine Aminogruppe $-N(R_1)H$ bzw. $-N(R_2)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem Triazin der Formel (31) bzw. (32) durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (31) bzw. (32) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Bevorzugte Ausführungsformen des erfindungsgemässen Verfahrens sind dadurch gekennzeichnet, dass man

a*) s-Triazine der Formeln (31) und (32) verwendet, worin $X_1$ und $X_2$ Fluor, Chlor oder Carboxypyridinium, insbesondere Fluor oder Chlor ist.

b*) ein Diamin der Formel (33) verwendet, worin $B_1$ und $B_2$ je ein Wasserstoffatom ist.

c*) ein Diamin der Formel (33) verwendet, worin n die Zahl 1 oder 2 und Q Sulfo ist.

d*) ein Diamin der Formel (33) verwendet, worin E ein Rest der Formel (1a) ist.

e*) ein Diamin der Formel (33) verwendet, worin E ein Rest der Formel (1b) ist.

f*) ein Amin der Formel (34) verwendet, worin A ein Rest der Formel (1c) ist.

g*) ein Diamin der Formel (33) verwendet, worin E ein Rest der Formel (1a), n die Zahl 1 oder 2 und Q Sulfo ist.

h*) ein Diamin der Formel (33) verwendet, worin E ein Rest der Formel (1b), n die Zahl 2 und Q Sulfo ist, wobei Q in ortho-Stellung zu der $-O-(CH_2)_2-NH-$ Gruppe gebunden ist.

i*) Verbindungen der Formel (30) und (34) verwendet, worin $D_1$ die gleiche Bedeutung wie $D_2$ und $R_1$ die gleiche Bedeutung wie $R_2$ hat.

j*) Verbindungen der Formel (30) und (34) verwendet, worin $D_1$ und $D_2$ je ein Azo-, Metallkomplexazo- oder Formazanfarbstoffrest ist.

k*) Verbindungen der Formel (30) und (34) verwendet, worin $R_1$ und $R_2$ Wasserstoff, Methyl oder Ethyl ist.

l*) Verbindungen der Formel (34) verwendet, worin A ein Rest der Formel (1d) ist, und insbesondere $R_3$ und $R_4$ unabhängig voneinander Wasserstoff oder $C_1$-$C_6$-Alkyl, das durch Hydroxy, $C_1$-$C_4$-Alkoxy, Hydroxy-$C_2$-$C_4$-alkoxy, $C_1$-$C_4$-Alkoxycarbonyl, $C_1$-$C_4$-Alkyl-carbonyloxy, Carboxy, Cyan, Halogen, Sulfo oder Sulfato substituiert sein kann, bedeuten; oder $R_3$ Wasserstoff und $R_4$ Benzyl oder Phenethyl, das im Phenylring durch Sulfo substituiert sein kann, ist; oder $R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder worin $R_3$ Wasserstoff und $R_4$ Naphthyl, das durch Hydroxy oder Sulfo substituiert sein kann, ist; oder der Rest der Formel (1d) Morpholino, Piperidino oder Piperazino ist.

m*) Verbindungen der Formel (30) verwendet, worin $D_1$ der Rest eines Azo-, Metallkomplexazo- oder Formazanfarbstoffes ist.

n*) Verbindungen der Formel (30) verwendet, worin $R_1$ Wasserstoff, Methyl oder Ethyl ist.

Besonders bevorzugte Ausführungsformen des erfindungsgemässen Verfahrens sind dadurch gekennzeichnet, dass man einen Farbstoff der Formel (2a) oder (2b) herstellt, worin A ein Rest der Formel (1c) ist und $D_1$ und $D_2$ die gemäss j*) und $R_1$ und $R_2$ die gemäss k*) angegebenen Bedeutungen haben, indem man ein Diamin der Formel

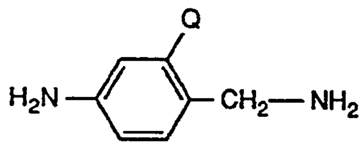 (37)

oder

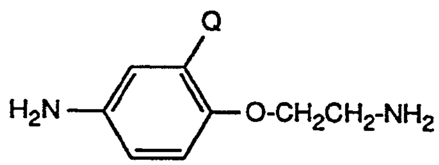 (38)

verwendet.

Ebenfalls besonders bevorzugte Ausführungsformen des erfindungsgemässen Verfahrens sind dadurch gekennzeichnet, dass man Farbstoffe der Formel (2a), (2b) oder (2c) herstellt, worin A ein Rest der Formel (1d) ist und $D_1$ die gemäss m*) und $R_1$ die gemäss n*) angegebenen Bedeutungen haben, indem man ein Diamin der Formel (37), (38) oder

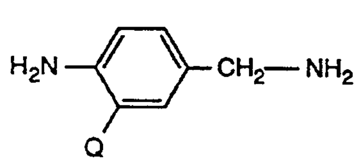 (39)

verwendet; insbesondere verwendet man ein Amin der Formel (1d), worin $R_3$ und $R_4$ unabhängig voneinander Wasserstoff oder $C_1$-$C_6$-Alkyl, das durch Hydroxy, $C_1$ -$C_4$-Alkoxy, Hydroxy-$C_2$-$C_4$-alkoxy, $C_1$-$C_4$-Alkoxycarbonyl, $C_1$-$C_4$-Alkylcarbonyloxy, Carboxy, Cyan, Halogen, Sulfo oder Sulfato substituiert sein kann, bedeuten; oder

$R_3$ Wasserstoff und $R_4$ Benzyl oder Phenethyl, das im Phenylring durch Sulfo substituiert sein kann, ist; oder

$R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder worin $R_3$ Wasserstoff und $R_4$ Naphthyl, das durch Hydroxy oder Sulfo substituiert sein kann, ist; oder

der Rest der Formel (1d) Morpholino, Piperidino oder Piperazino ist.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Farbstoffe der Formeln (30) bzw. (34)

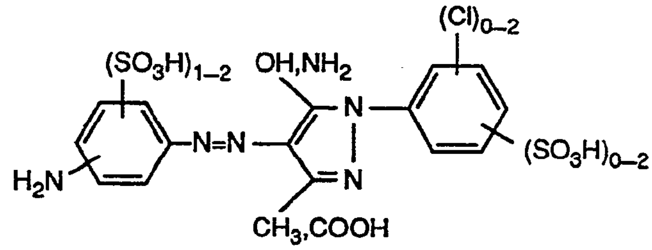

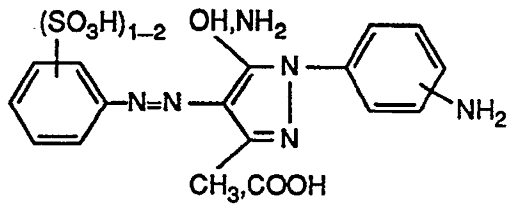

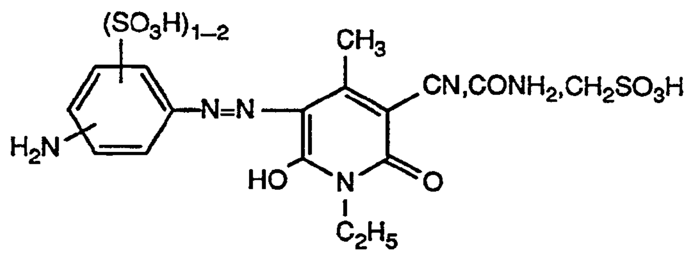

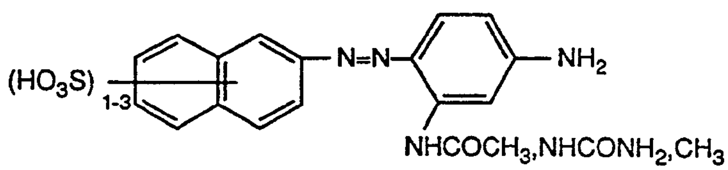

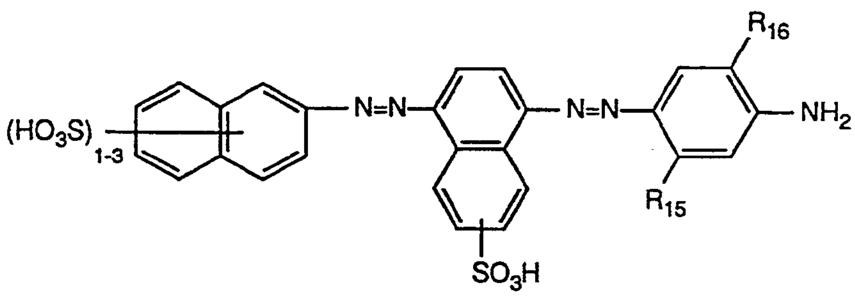

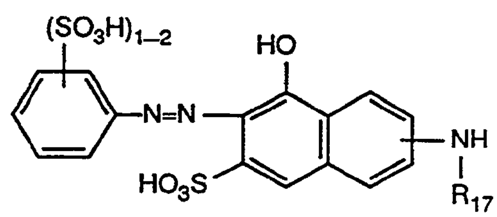

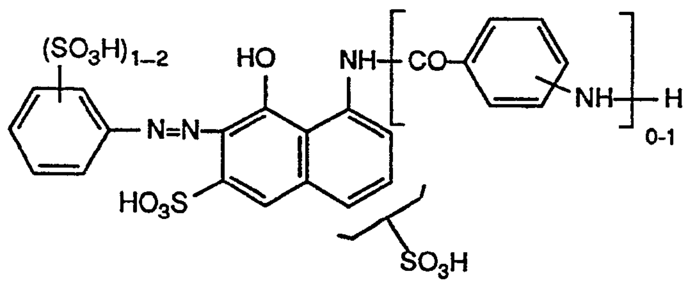

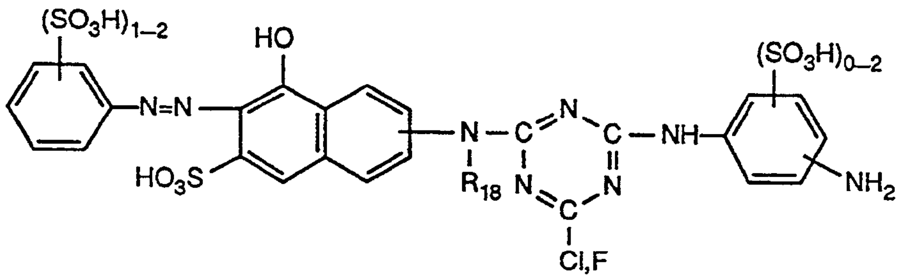

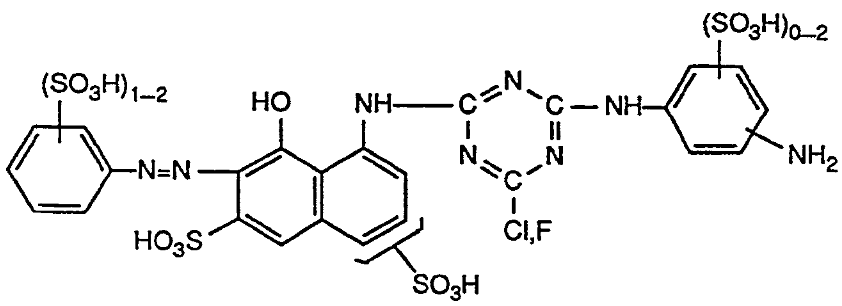

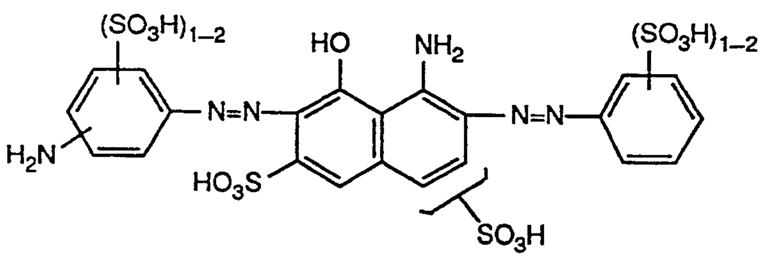

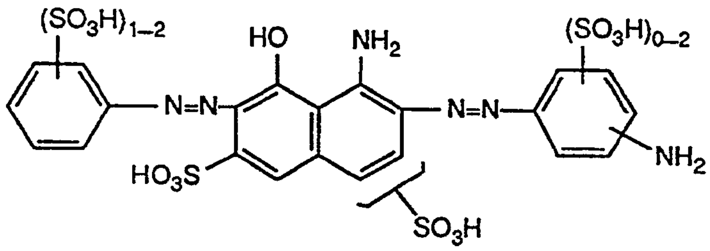

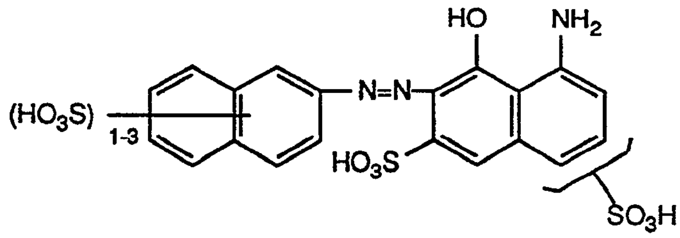

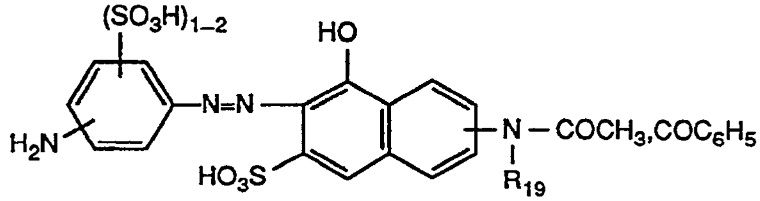

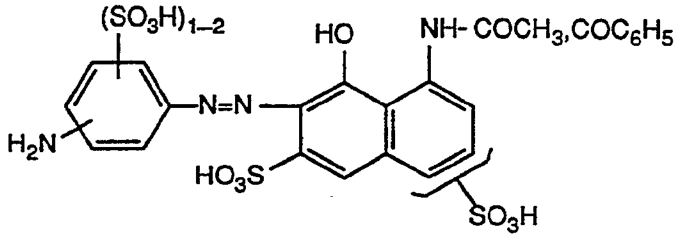

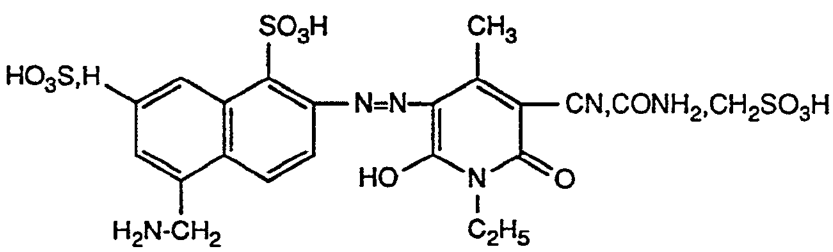

Metallkomplexe von Farbstoffen der Formeln:

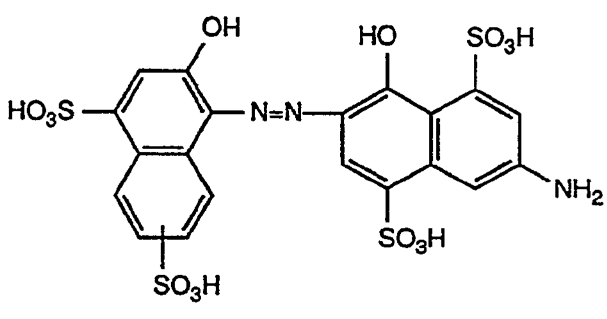

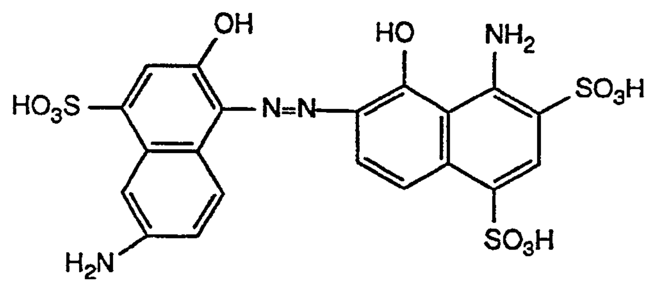

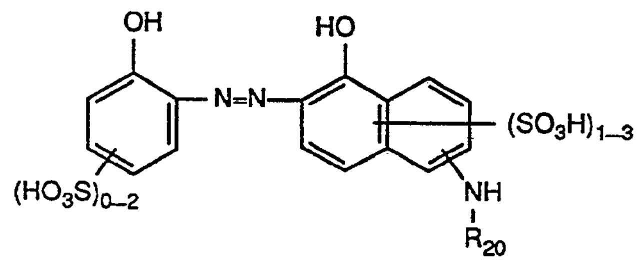

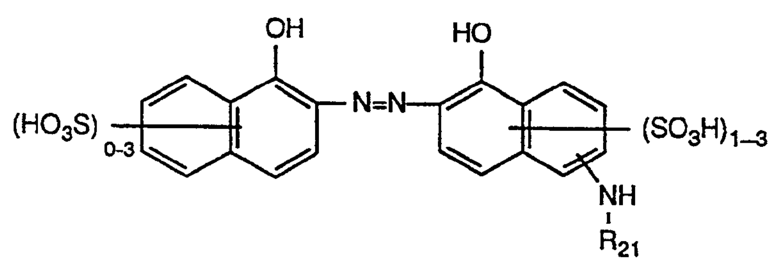

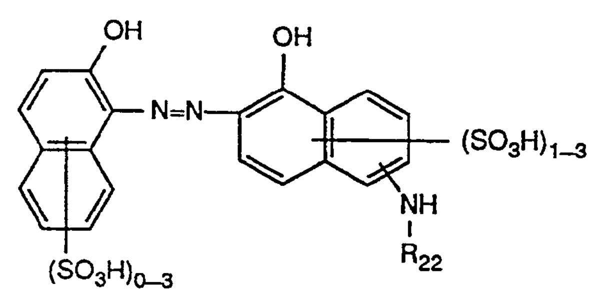

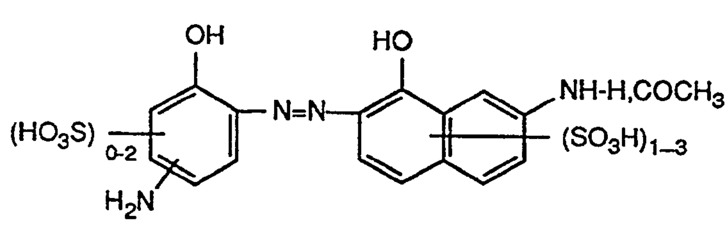

Als Metallatome sind Cu (1:1-Komplex) oder Cr und Co (1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Anthrachinonfarbstoffe der Formel:

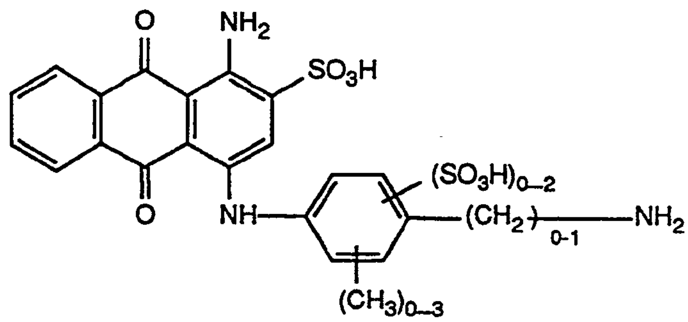

Phthalocyaninfarbstoffe der Formel:

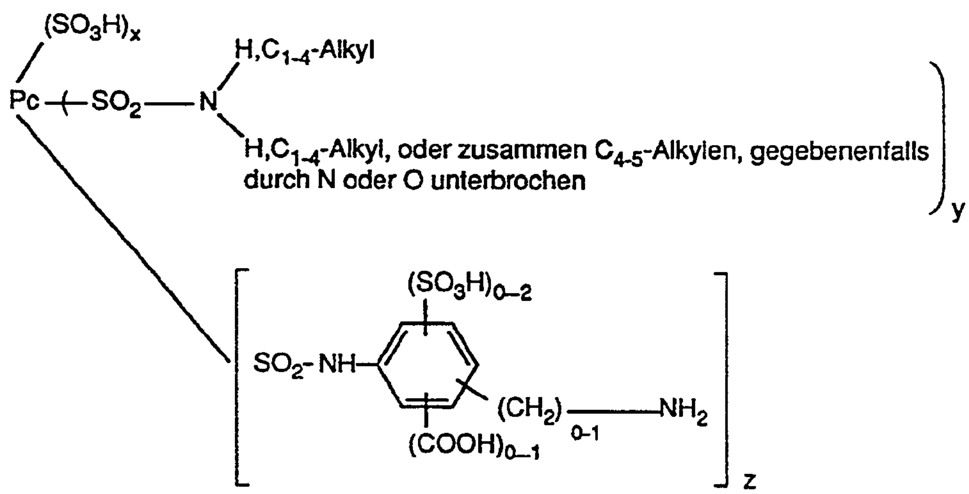

In dieser Formel steht Pc für den Cu- oder Ni-Phthalocyaninrest, die Summe von x, y und z ist 3-4.

Formazanfarbstoffe der Formel:

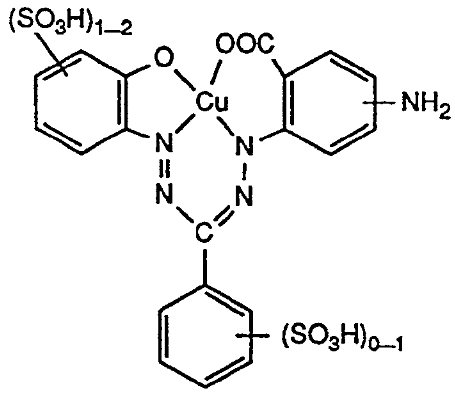

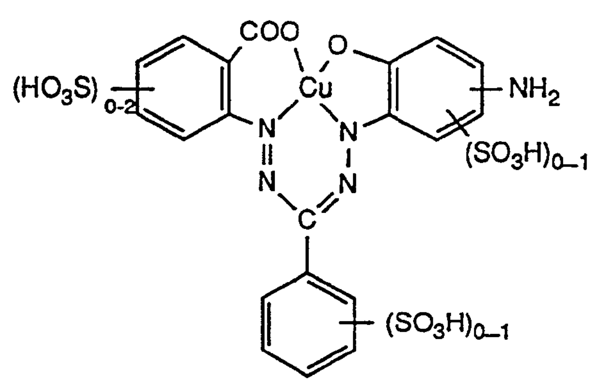

Dioxazinfarbstoffe der Formel:

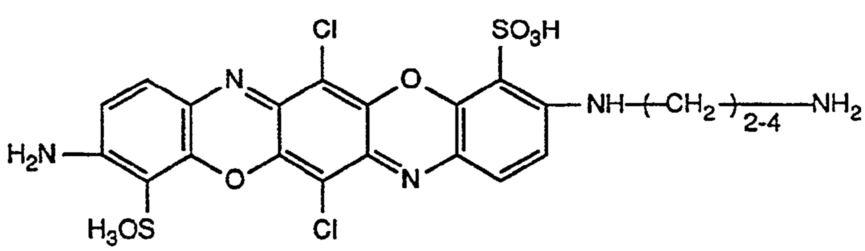

In den oben aufgeführten Formeln bedeuten die Reste $R_{17}$ bis $R_{22}$ Wasserstoff oder $C_1$-$C_4$-Alkyl, und die Reste $R_{15}$ und $R_{16}$ Wasserstoff, $C_1$-$C_4$-Alkyl, $C_1$-$C_4$-Alkoxy, $C_1$-$C_4$-Alkanoylamino, Ureido oder Halogen, wobei die Reste $R_{15}$ und $R_{16}$, die zu ein und derselben Formel gehören, voneinander unabhängig sind. Vorzugsweise bedeuten die Reste $R_{17}$ bis $R_{22}$ Wasserstoff, Methyl oder Ethyl, und die Reste $R_{15}$ und $R_{16}$ Wasserstoff, Methyl, Ethyl, Methoxy, Ethoxy, Acetylamino, Ureido oder Chlor. Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

Als Diazo- und Kupplungskomponenten seien einzeln genannt:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenylether, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5- dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder-5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol- 6- sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxy oder -4-methylbenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6-oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 4-(β-Sulfatoethylsulfonyl)-anilin, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-6-nitrobenzol-4-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1,4-Diaminobenzol-2,5-disulfonsäure, 1,4-Diaminobenzol- 2,6-disulfonsäure, 1,3-Diaminobenzol-4,6-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-

hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Ethylamino-8-hydroxynaphthalin-6-sulfonsäure, 2-(N-Acetyl-N-methylamino)-8- hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetylamino-8- hydroxynaphthalin- 3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure, 1 -(3′-Aminobenzoylamino)-8-hydroxynaphthalin-3,6- bzw. -4,6-disulfonsäure, 1 -(3′-Nitrobenzoylamino)-8-hydroxynaphthalin-3,6- bzw. -4,6- disulfonsäure, 2-(4′-Amino-3′-sulfophenylamino)-5-hydroxynaphthalin-7-sulfon säure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′ -Methyl-4′-sulfophenyl)-5-pyrazolon-3-carbonsäure, 1-(4′,8′-Disulfonaphthyl-[2′])-3-methyl-5-pyrazolon, 1-(5′, 7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridon-(2), 1-Ethyl-3-cyan- oder -3-chlor-4-methyl-6-hydroxypyridon-(2), 1-Ethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyethylamino)-3-cyan-4-methyl-6-aminopyridin, 2,6-Bis-(2′-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-β-Aminoethyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyethylaminobenzol, 1-Amino-3-N,N-di-β-sulfatoethylaminobenzol, 1-Amino-3-N,N-di-β-hydroxyethylamino-4-methoxybenzol, 1-Amino-3-N,N-di-β-sulfatoethylamino-4-methoxybenzol, 1-Amino-3-sulfo- benzylamino-benzol, 1-Amino-3-sulfo-benzylamino-4-chlorbenzol, 1-Amino-3-N,N-di-sulfobenzylaminobenzol.

Triazine der Formel (31) bzw. (32)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

Diamine der Formel (33)

4-Aminomethyl-3-sulfoanilin, 4-Aminomethyl-2-sulfoanilin, 4-(β-Aminoethoxy)-3-sulfoanilin.

Amine der Formel (34)

Ammoniak, Methylamin, Dimethylamin, Ethylamin, Diethylamin, Propylamin, Isopropylamin, Butylamin, Dibutylamin, Isobutylamin, sek.-Butylamin, tert.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-Sulfatoethylamin, Benzylamin, Phenethylamin, Cyclohexylamin, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyethylaminobenzol, N-β-Chlorethylaminobenzol, N-β-Cyanethylaminobenzol, N-β-Sulfoethylaminobenzol, 1-(N-Ethylamino)-2-3- oder -4-methylbenzol, 1-(N-Ethylamino)-2-, -3- oder -4-ethylbenzol, 1-(N-Ethylamino)-2-, -3- oder -4-chlorbenzol, 1-N-Ethylaminobenzol-3- oder -4-sulfonsäure, 1-(N-Ethylamino)-4-butylbenzol, 1-(N-Ethylamino)-4-hexylbenzol, 1-(N-Ethylamino)-4-octylbenzol, 1-(N-Ethylamino)-4-vinylbenzol, 1-N-n-Butylamino-3-methylbenzol, 1-(N-Ethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Ethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfon-

säure, p-Aminosalicyclsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin- 1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin.

Die Kondensation der s-Triazine der Formeln (31) und (32), insbesondere eines 2,4,6-Tri-halogen-s-triazins mit den Farbstoffen der Formeln (30) und (34) bzw. den eine Gruppe $-N(R_1)H$ bzw. $-N(R_2)H$ enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogens-triazins mit den Verbindungen der Formel (33) bzw. (34) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (33) kann vor oder nach der Kondensation des Halogentriazins mit einem Farbstoff der Formel (30) bzw. (34) geschehen. Die Kondensation des Halogentriazins mit einer Verbindung der Formel (33) erfolgt vorzugsweise in wässriger Lösung oder Suspension, beiniedriger Temperatur (0 bis 40°C) und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, synthetischen Polyamidfasern und Polyurethanen, und insbesondere cellulosehaltiger Fasermaterialien aller Art. Solche Fasermaterialien sind beispielsweise die natürlichen Cellulosefasern, wie Baumwolle, welche besonders bevorzugt ist, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin $D_1$, oder $D_1$ und $D_2$, der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Reaktivfarbstoffe der Formel (1) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften,

wie Wasch-, Wasser-, Seewasser-, Überfärbe- und Schweissechtheiten, sowie eine gute Plissierechtheit, Bügelechtheit und Reibechtheit und eine sehr gute Chlorbadewasserechtheit.

Die erfindungsgemässen Farbstoffe der Formel (1) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triethanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1: 30,5 Teile des Farbstoffes der Formel

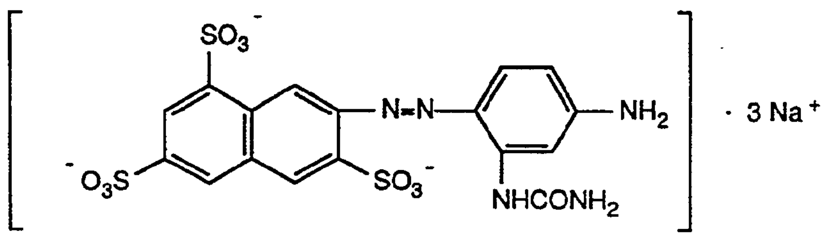

werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 3,1 Teile der Verbindung

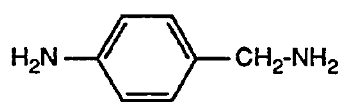

enthält. Der pH-Wert des Reaktionsgemisches wird nun durch Zufügen von Natriumcarbonat auf 7,5 und die Temperatur langsam auf 25°C erhöht. Nach beendigter Kondensation wird der Farbstoff der Formel

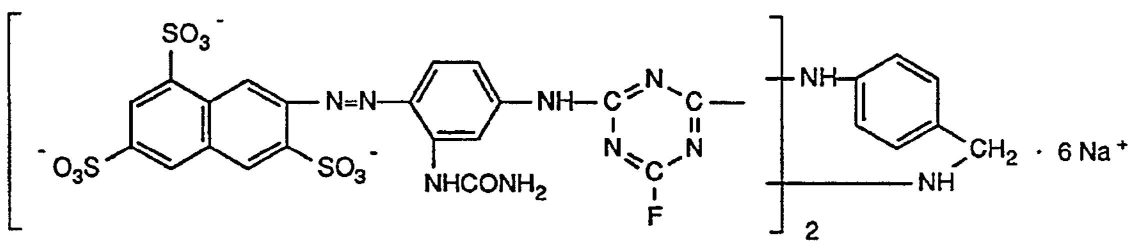

nach Zugabe von Puffersalzen mit Natriumchlorid gefällt, filtriert, gewaschen und getrocknet. Er stellt ein oranges Pulver dar und färbt Baumwolle in goldgelben Tönen.

Beispiel 2: 30,5 Teile des Farbstoffes der Formel

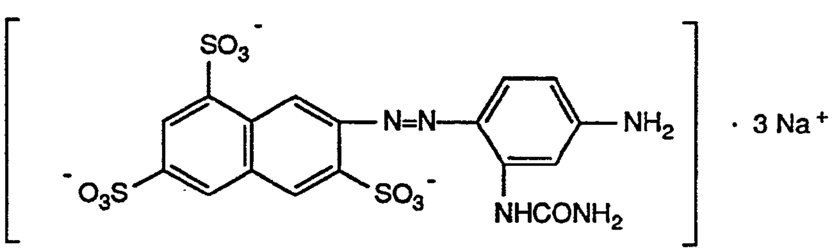

werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 5,8 Teile der Verbindung

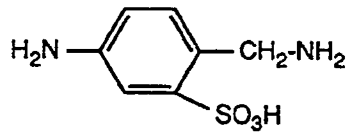

enthält. Der pH-Wert des Reaktionsgemisches wird nun durch Zufügen von Natriumcarbonat auf 7,5 und die Temperatur langsam auf 25°C erhöht. Nach beendigter Kondensation wird der Farbstoff der Formel

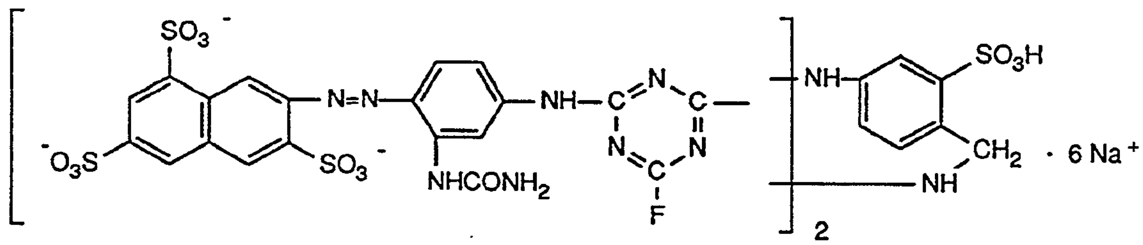

nach Zugabe von Puffersalzen mit Natriumchlorid gefällt, filtriert, gewaschen und getrocknet. Er stellt ein oranges Pulver dar und färbt Baumwolle in goldgelben Tönen.

Beispiel 3: 30,5 Teile des Farbstoffes der Formel

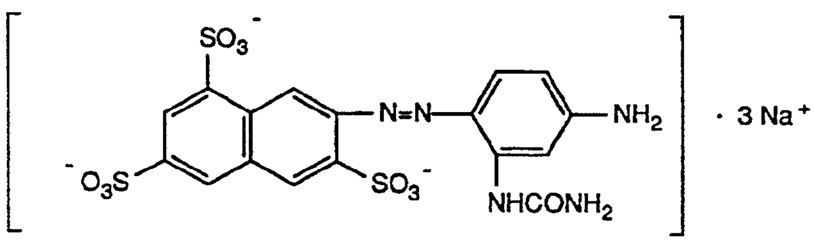

werden in 600 Vol.Teilen Wasser gelöst und mit 11 Teilen 2,4,6-Trichlor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 3,1 Teile der Verbindung

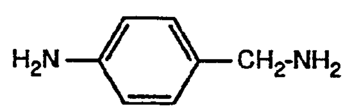

enthält. Der pH-Wert des Reaktionsgemisches wird nun durch Zufügen von Natriumcarbonat auf 7,5 und die Temperatur langsam auf 25°C erhöht. Nach beendigter Kondensation wird der Farbstoff der Formel

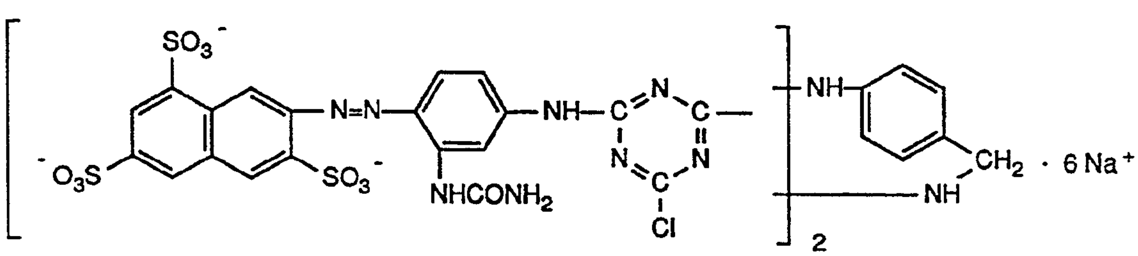

nach Zugabe von Puffersalzen mit Natriumchlorid gefällt, filtriert, gewaschen und getrocknet. Er stellt ein oranges Pulver dar und färbt Baumwolle in goldgelben Tönen.

<u>Beispiel 4:</u> 30,5 Teile des Farbstoffes der Formel

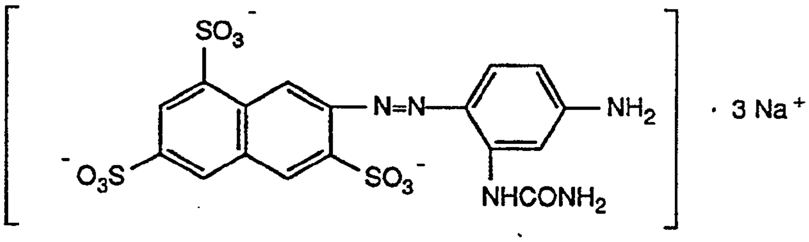

werden in 600 Vol.Teilen Wasser gelöst und mit 7,4 Teilen 2,4,6-Trifluor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 7,3 Teile der Verbindung

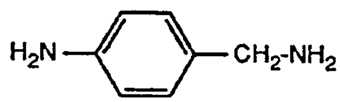

enthält. Der pH-Wert des Reaktionsgemisches wird nun durch Zufügen von Natriumcarbonat auf 7,5 und die Temperatur langsam auf 25°C erhöht. Nach beendigter Kondensation wird die Reaktionslösung mit 48 Teilen der folgenden Verbindung

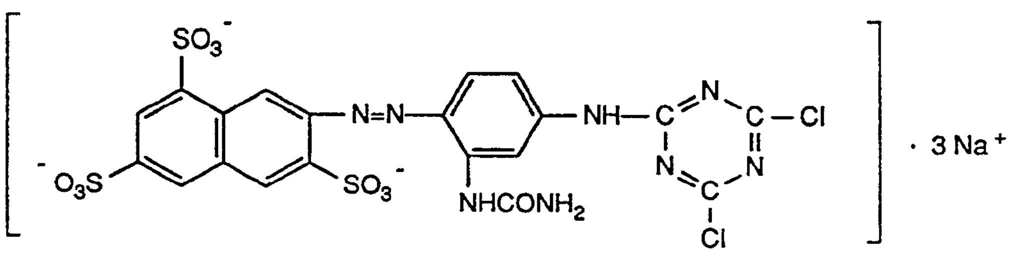

versetzt und bei Raumtemperatur bis 30°C und pH 8-9 kondensiert. Nach beendigter Kondensation wird der Farbstoff der Formel

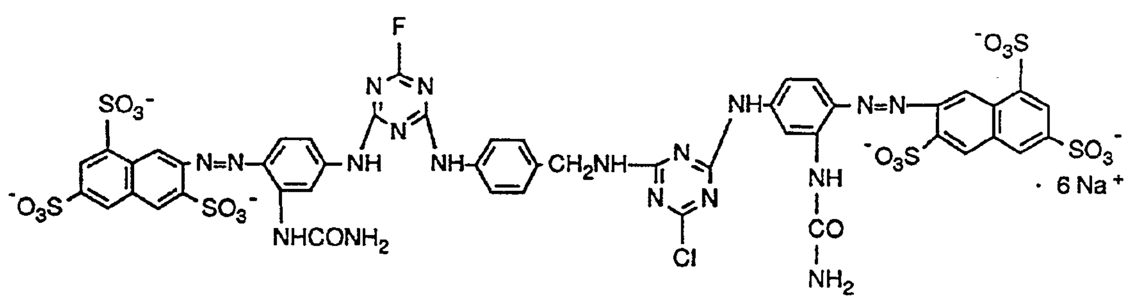

nach Zugabe von Puffersalzen mit Natriumchlorid gefällt, filtriert, gewaschen und getrocknet. Er stellt ein oranges Pulver dar und färbt Baumwolle in goldgelben Tönen.

Beispiel 5: 30,5 Teile des Farbstoffes der Formel

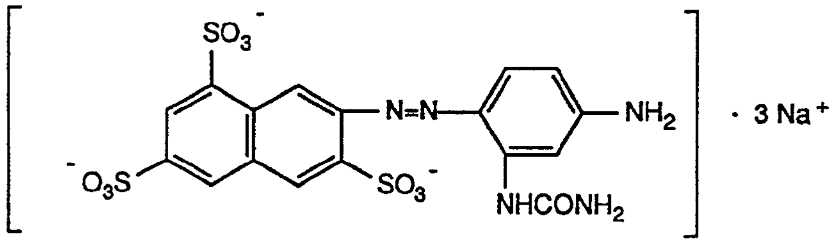

werden in 600 Vol.Teilen Wasser gelöst und mit 11 Teilen 2,4,6-Trichlor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 7,3 Teile der Verbindung

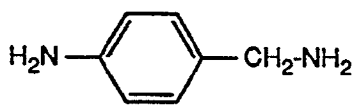

enthält. Der pH-Wert des Reaktionsgemisches wird nun durch Zufügen von Natriumcarbonat auf 7,5 und die Temperatur langsam auf 25°C erhöht. Nach beendigter Kondensation wird die Reaktionslösung mit 46 Teilen der folgenden Verbindung

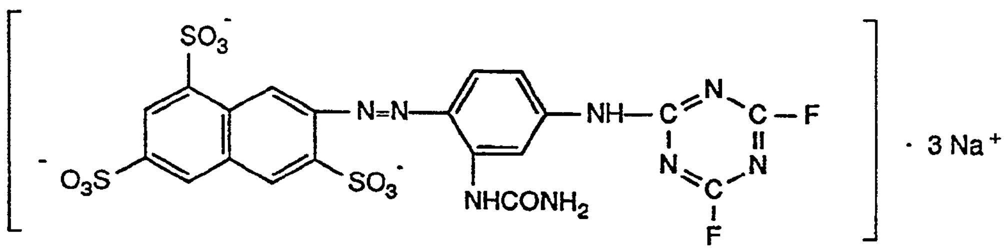

versetzt und bei Raumtemperatur bis 30°C und pH 8-9 kondensiert. Nach beendigter Kondensation wird der Farbstoff der Formel

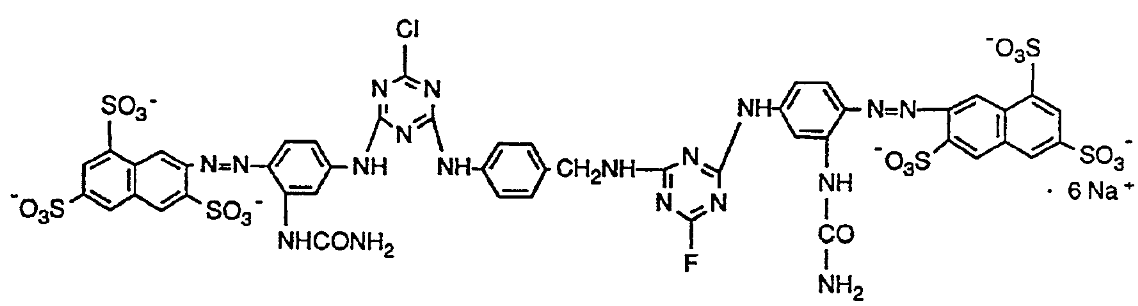

nach Zugabe von Puffersalzen mit Natriumchlorid gefällt, filtriert, gewaschen und getrocknet. Er stellt ein oranges Pulver dar und färbt Baumwolle in goldgelben Tönen.

Beispiel 6: 30,5 Teile des Farbstoffes der Formel

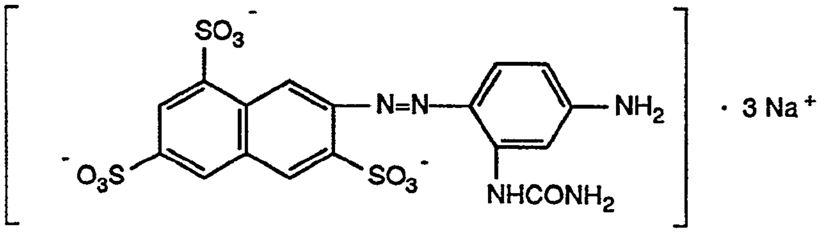

werden in 600 Vol.Teilen Wasser gelöst und mit 7,4 Teilen 2,4,6-Trifluor-1,3,5-triazin bei 0 bis 2°C und bei einem pH-Wert von 4,5 gemäss den vorangehenden Beispielen kondensiert. Nach beendeter Acylierung versetzt man die Farbstofflösung mit 130 Vol.Teilen einer wässrigen Lösung, die 11,6 Teile der Verbindung

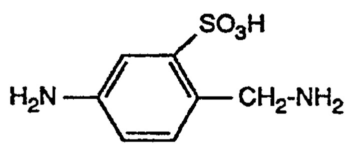

(Na-Salz) enthält, und lässt anschliessend die Temperatur auf 20°C steigen. Der pH-Wert der Reaktionslösung wird mit Natriumcarbonatlösung bei 4,5 gehalten. Nach beendeter Umsetzung werden 100 Teile einer wässrigen Lösung, die 14 Teile

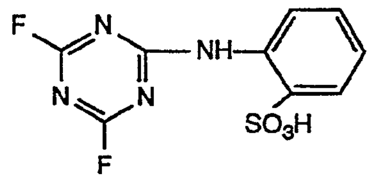

enthält, und bei pH 8,5 bis 9 kondensiert. Nach beendeter Reaktion wird der Farbstoff der Formel

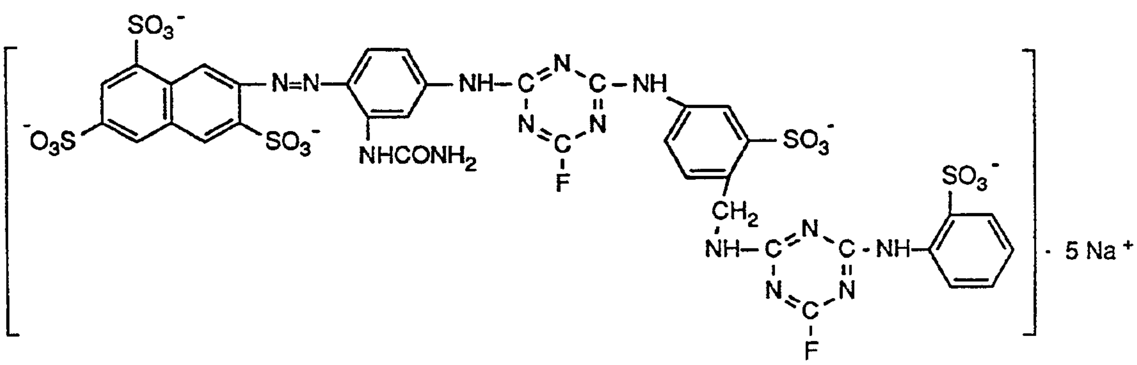

nach Zugabe von Puffersalzen mit Natriumchlorid gefällt, filtriert und gewaschen. Er stellt nach dem Trocknen ein oranges Pulver dar und färbt Baumwolle in goldgelben Tönen.

Beispiel 7: 30,5 Teile des Farbstoffes der Formel

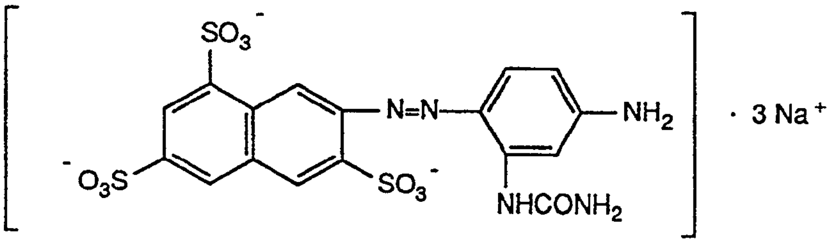

werden in 600 Vol.Teilen Wasser gelöst und mit 11 Teilen 2,4,6-Trichlor-1,3,5-triazin bei 0 bis 2°C und bei einem pH-Wert von 4,5 gemäss den vorangehenden Beispielen kondensiert. Nach beendeter Acylierung versetzt man die Farbstofflösung mit 130 Vol.Teilen einer wässrigen Lösung, die 11,6 Teile der Verbindung

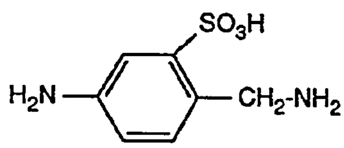

(Na-Salz) enthält, und lässt anschliessend die Temperatur auf 20°C steigen. Der pH-Wert der Reaktionslösung wird mit Natriumcarbonatlösung bei 4,5 gehalten. Nach beendeter Umsetzung werden 100 Teile einer wässrigen Lösung, die 14 Teile

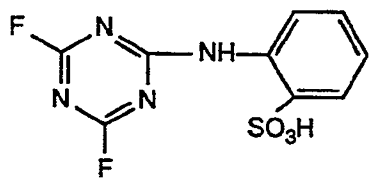

enthält, und bei pH 8,5 bis 9 kondensiert. Nach beendeter Reaktion wird der Farbstoff der Formel

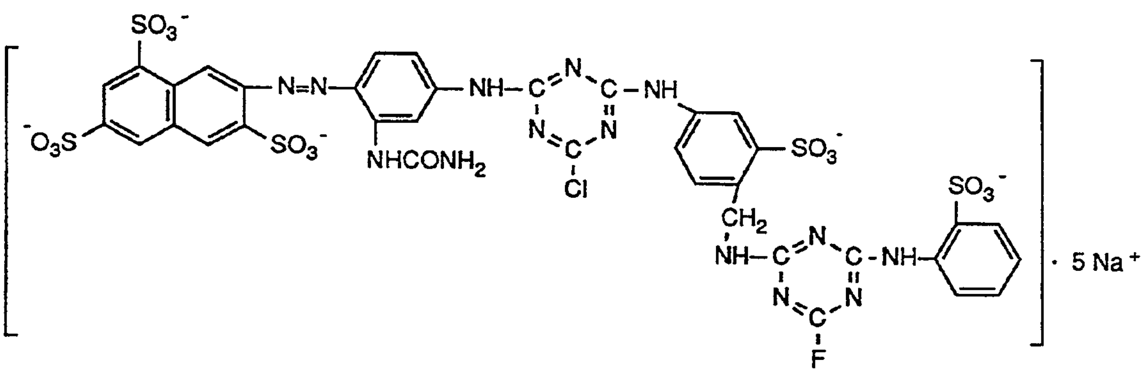

nach Zugabe von Puffersalzen mit Natriumchlorid gefällt, filtriert und gewaschen. Er stellt nach dem Trocknen ein oranges Pulver dar und färbt Baumwolle in goldgelben Tönen.

Verwendet man in den Beispielen 6 und 7 anstelle der Orthanilsäure als Triazinsubstituent äquivalente Mengen der unten aufgeführten Amine oder acyliert anstelle des primären Kondensationsproduktes aus Triazin und Amin zuerst den Chromophor mit dem Trifluor-s-triazin und anschliessend mit einem der nachgenannten Amine, so werden weitere Farbstoffe erhalten, die Baumwolle in licht- und waschechten Tönen färben.

Amine:

Anilin-2,5-disulfonsäure, Methylamin, Ethanolamin, Diethanolamin, 2-Methylanilin-5-sulfonsäure, n-Butylamin, Anilin, N-Methylanilin, N-Ethylanilin, m-Toluidin, p-Toluidin, m-Chloranilin, p-Chloranilin, o-Anisidin, p-Anisidin, p-Phenetidin, p-Aminobenzoesäure, Anilin-3-sulfonsäure, 4-Aminoacetanilid, 3-Aminophenylharstoff, 4-Aminophenylharnstoff, Diethylamin, Morpholin, 2-Naphthylamin-6-sulfonsäure, 4-Aminosalicylsäure, Anilin-2,4-disulfonsäure, 1-Naphthylamin-4-sulfonsäure, 1-Naphthylamin-5-sulfonsäure, 2-Naphthylamin-6,8-disulfonsäure, 2-Naphthylamin-4,8-disulfonsäure, 2-Naphthylamin-5,7-disulfonsäure, 1-Naphthylamin-3,6- disulfonsäure, 1-Naphthylamin-4,6-disulfonsäure, 2-Naphthylamin-3,6,8-trisulfonsäure

Beispiel 8: 30,5 Teile des Farbstoffes der Formel

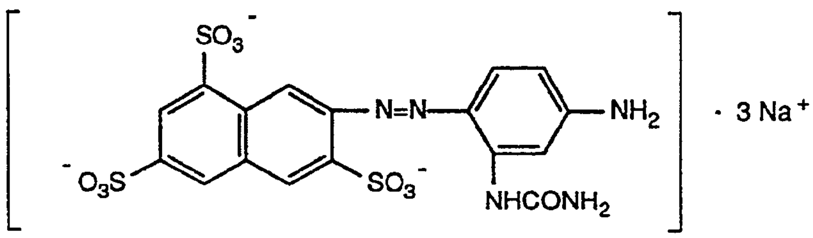

werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5°C und einem pH-Wert von 6,5 mit einer wässrigen Lösung, die 5,8 Teile der Verbindung

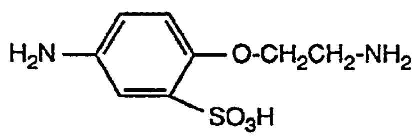

enthält. Der pH-Wert des Reaktionsgemisches wird nun durch Zufügen von Natriumcarbonat auf 7,5 und die Temperatur langsam auf 20°C erhöht. Nach beendigter Kondensation wird der Farbstoff der Formel

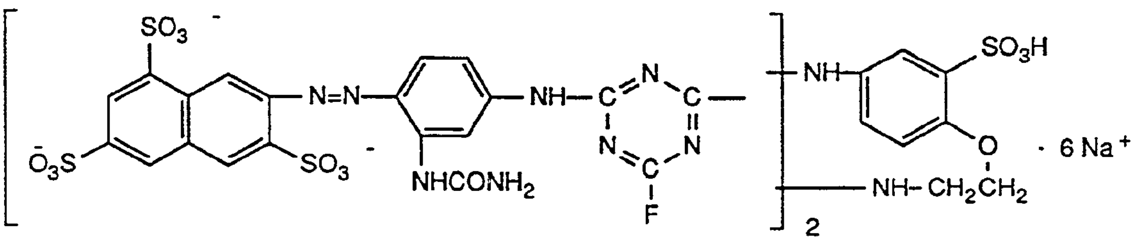

nach Zugabe von Puffersalzen mit Natriumchlorid gefällt, filtriert, gewaschen und getrocknet. Er stellt ein oranges Pulver dar und färbt Baumwolle in goldgelben Tönen.

Beispiel 9: 30,5 Teile des Farbstoffes der Formel

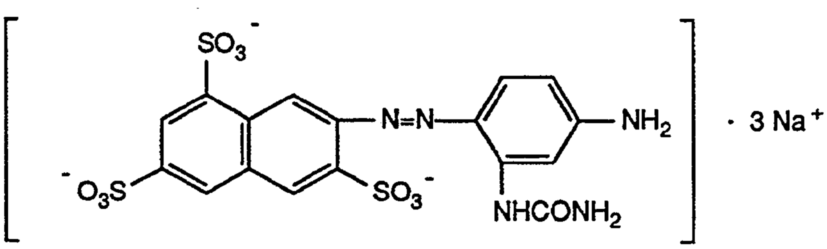

werden in 600 Vol.Teilen Wasser gelöst und mit 9,3 Teilen 2,4,6-Trichlor-1,3,5-triazin kondensiert. Wenn keine diazotierbaren Aminogruppen mehr nachweisbar sind, versetzt man die Farbstofflösung bei 0 bis 5°C und einem pH-Wert von 4,5 mit einer wässrigen Lösung, die 5,8 Teile der Verbindung

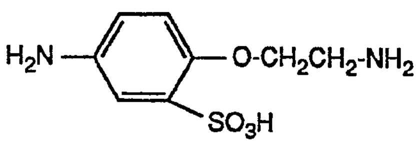

enthält. Der pH-Wert des Reaktionsgemisches wird nun durch Zufügen von Natriumcarbonat auf 8,5 und die Temperatur langsam auf 25°C erhöht. Nach beendigter Kondensation wird der Farbstoff der Formel

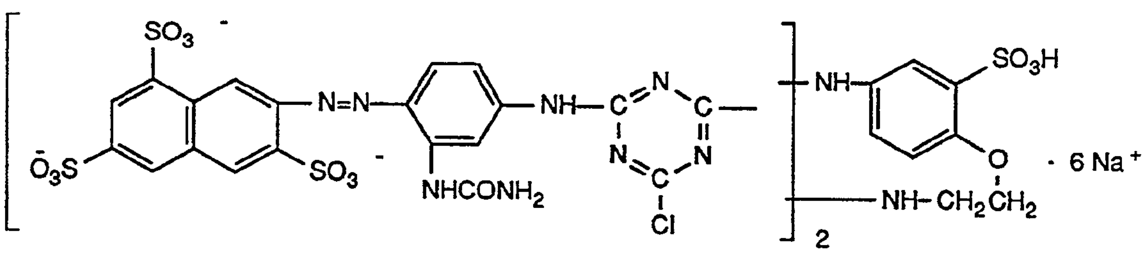

nach Zugabe von Puffersalzen mit Natriumchlorid gefällt, filtriert, gewaschen und getrocknet. Er stellt ein oranges Pulver dar und färbt Baumwolle in goldgelben Tönen.

Verfährt man, wie in den Beispielen 1 bis 9 angegeben, setzt jedoch statt des dort verwendeten Chromophors der Formel

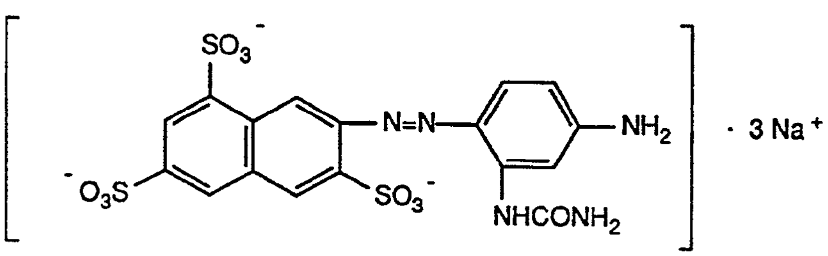

äquivalente Mengen der in der folgenden Tabelle in Kolonne I angegebenen Verbindungen ein, so erhält man weitere wertvolle Farbstoffe, die Baumwolle in den in Kolonne II angegebenen Tönen färben.

| I | II |
| --- | --- |
| 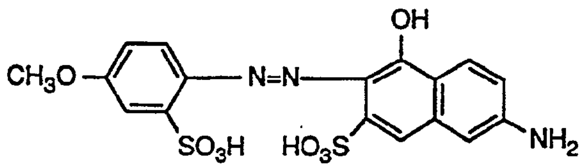 | scharlach |
| 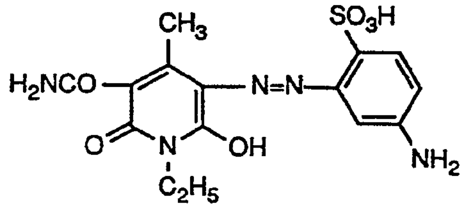 | grünstichig gelb |
| 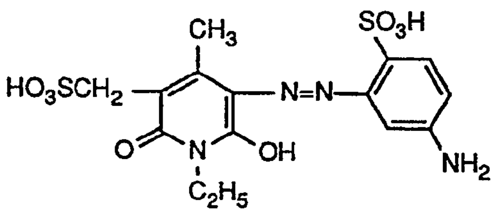 | grünstichig gelb |
| 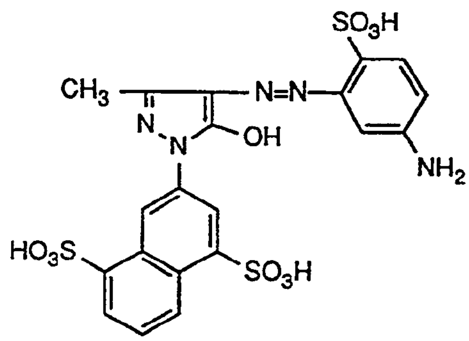 | gelb |
| 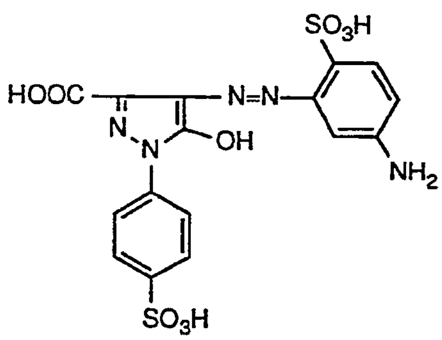 | gelb |

| I | II |
|---|---|
| 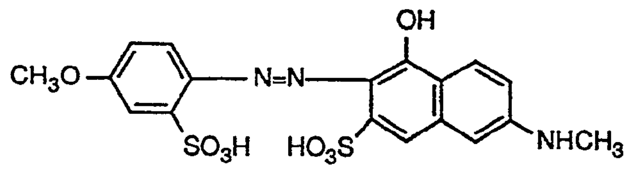 | scharlach |
| 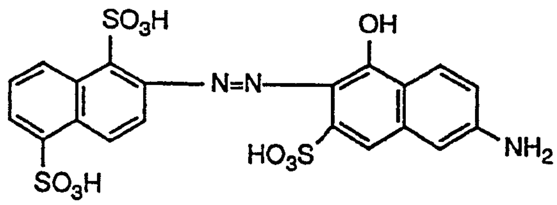 | orange |
| 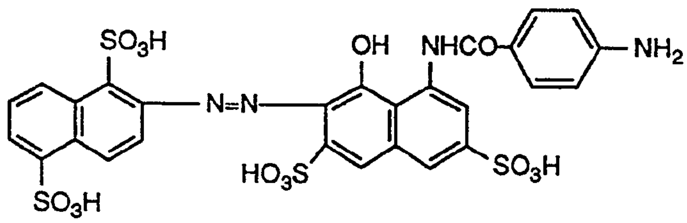 | blaustichig rot |
| 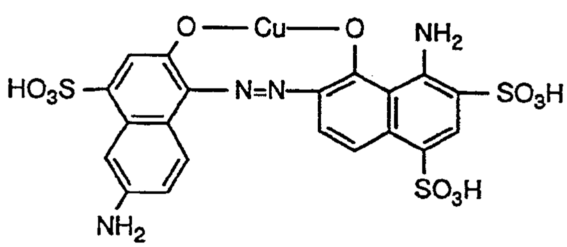 | blau |
| 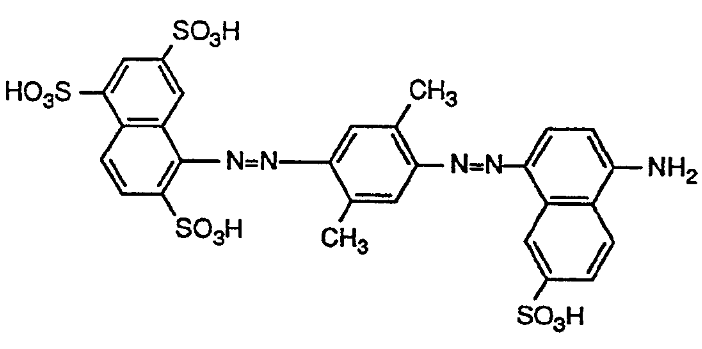 | braun |

| I | II |
|---|---|
| 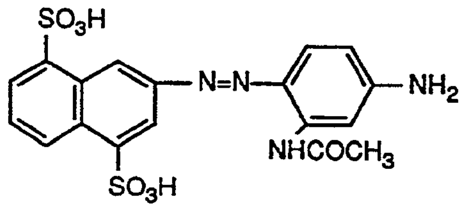 | gelb |
| 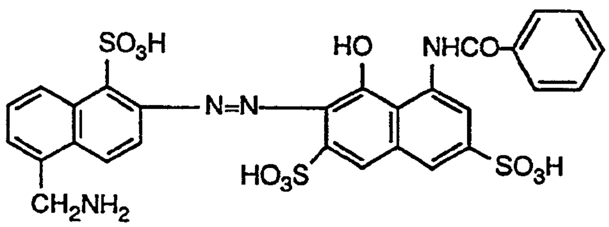 | blaustichig rot |
| 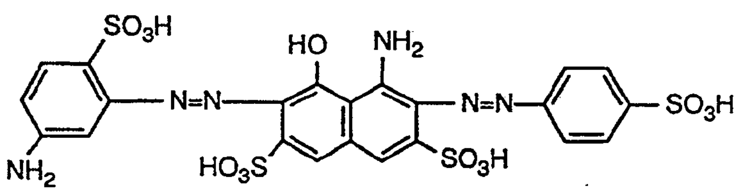 | dunkelblau |
| 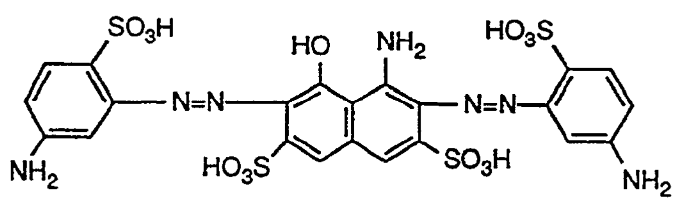 | grünstichig marineblau |
| 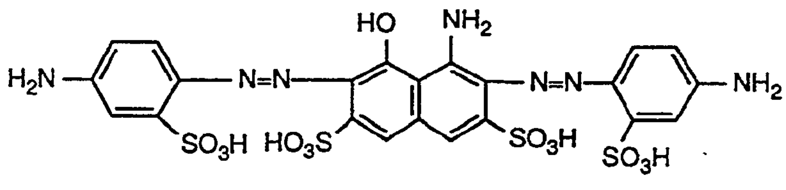 | grünblau |

| I | II |
|---|---|
| 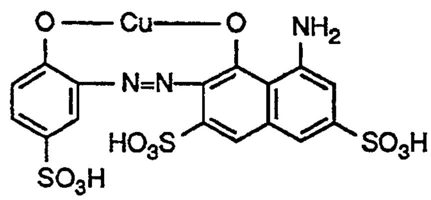 | violett |
| 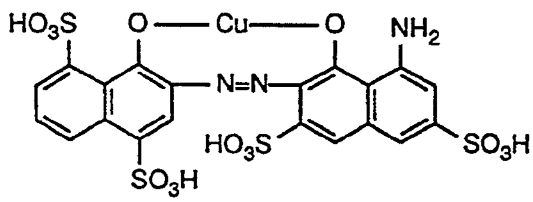 | blau |
| 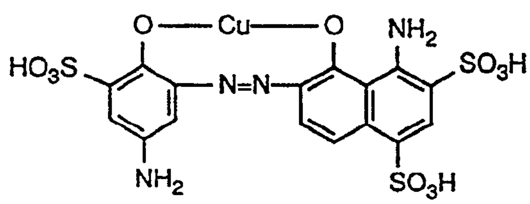 | rotstichig blau |
| 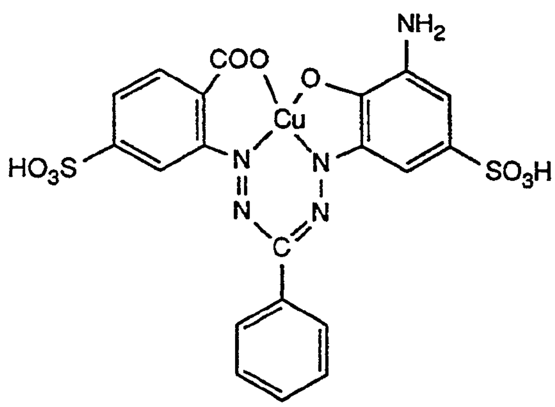 | blau |
| 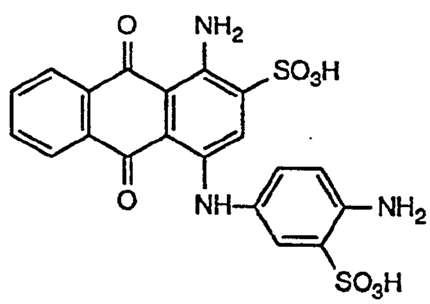 | grünstichig blau |

| I | II |
|---|---|
| 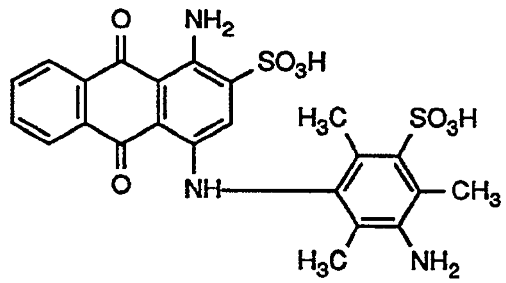 | königsblau |
| 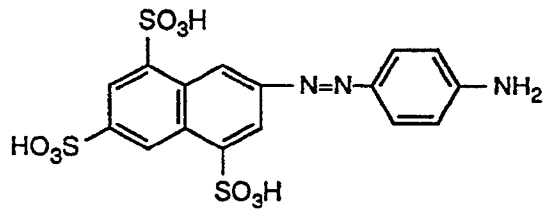 | gelb |
| 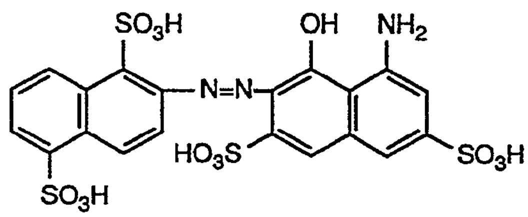 | blaustichig rot |
| 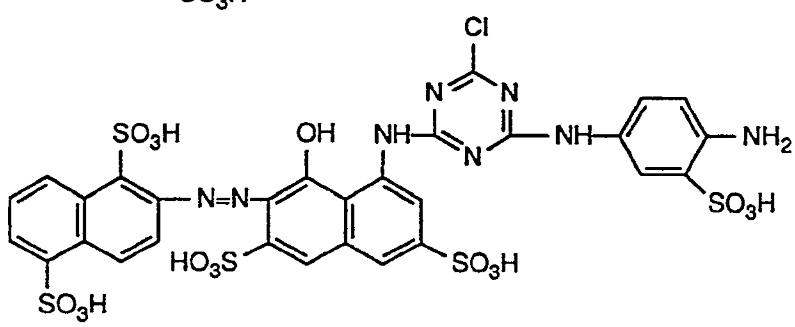 | blaustichig rot |
| 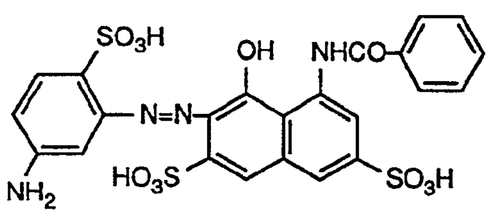 | blaustichig rot |

| I | II |
|---|---|
| 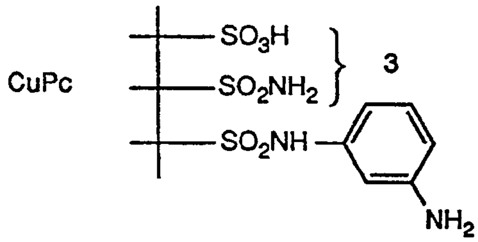 | türkis |
| 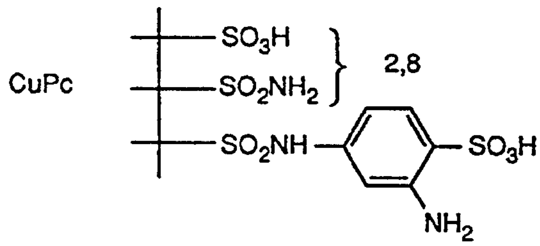 | türkis |
| 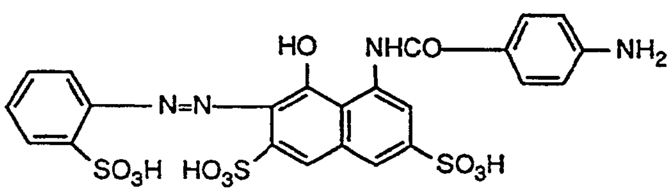 | rot |
| 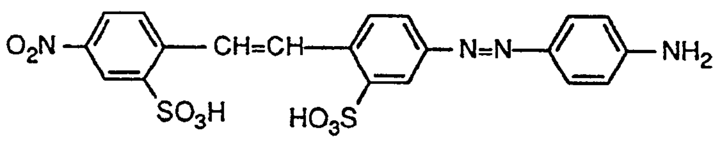 | gelb |
| 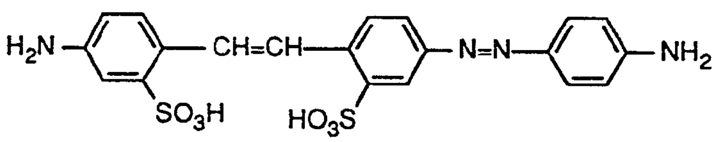 | gelb |
| 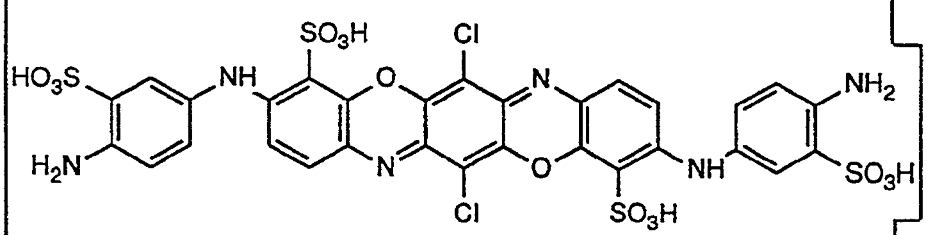 | blau |

| I | II |
|---|---|
| 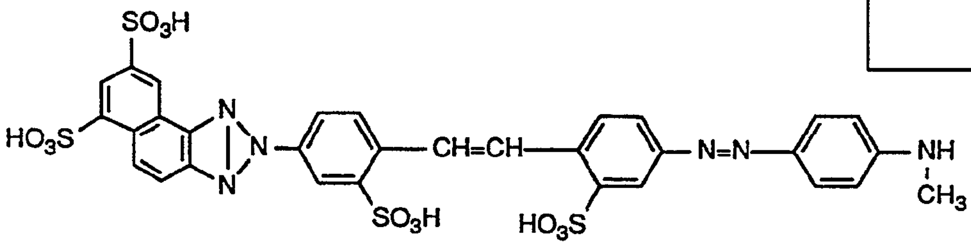 | gelb |
| 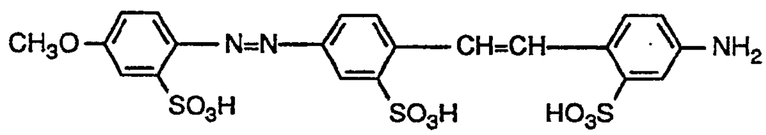 | gelb |
| 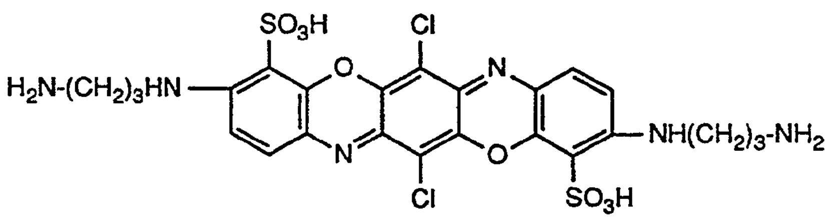 | blau |
| 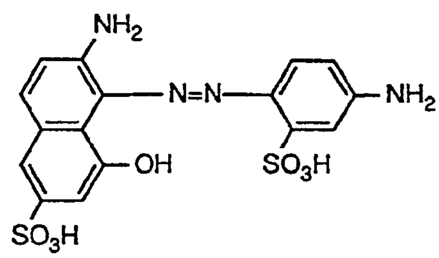 | blaustichig rot |
| 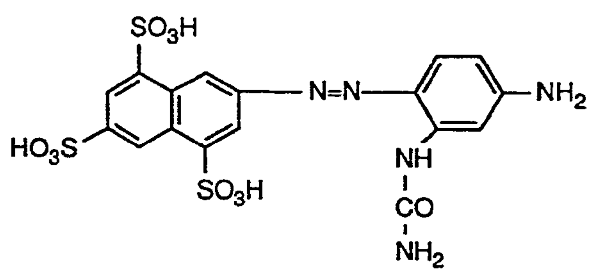 | gelb |

| I | II |
|---|---|
| 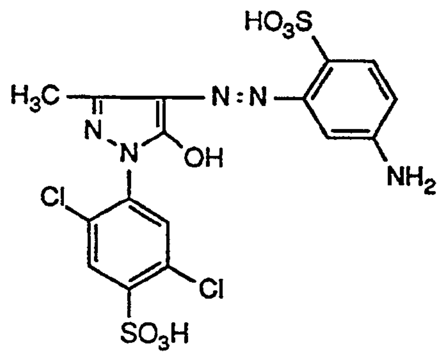 | grünstichig gelb |
| 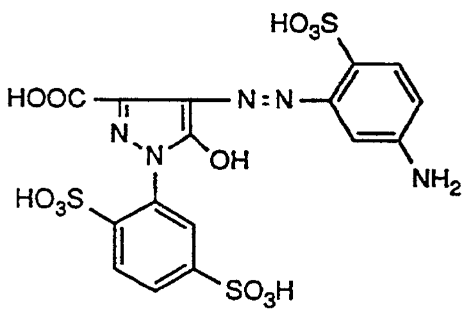 | grünstichig gelb |
| 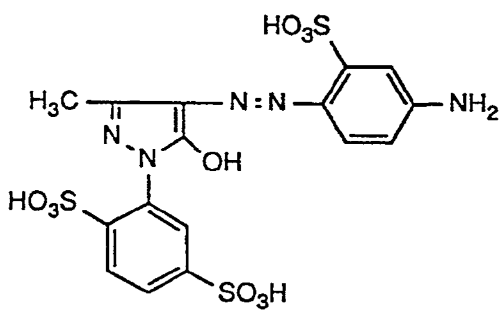 | goldgelb |
| 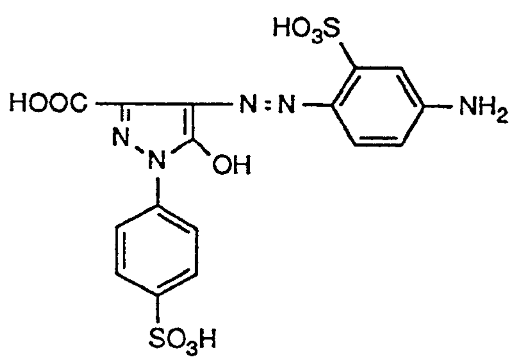 | goldgelb |

| I | II |
|---|---|
| 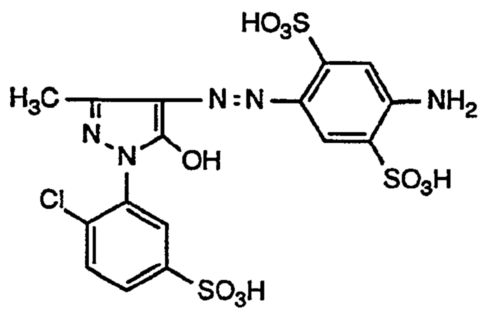 | goldgelb |
| 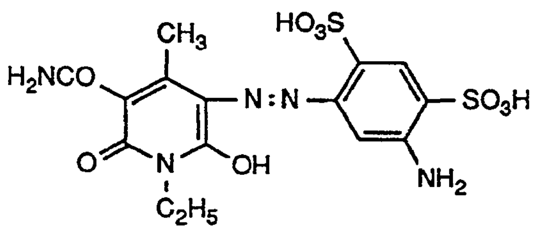 | grünstichig gelb |
| 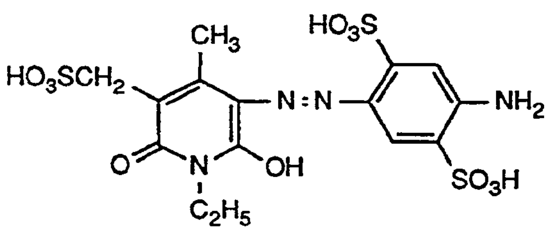 | goldgelb |
| 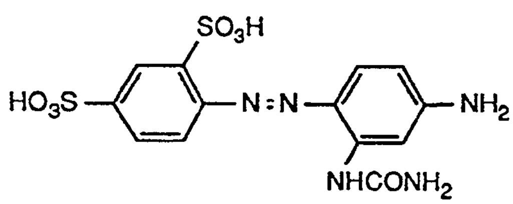 | goldgelb |
| 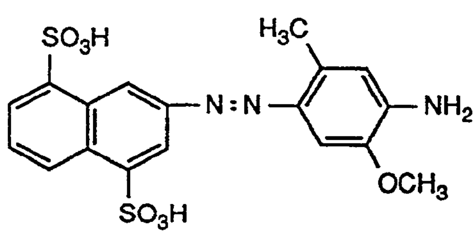 | goldgelb |

| I | II |
|---|---|
| 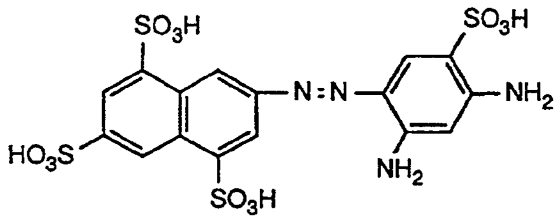 | goldgelb |
| 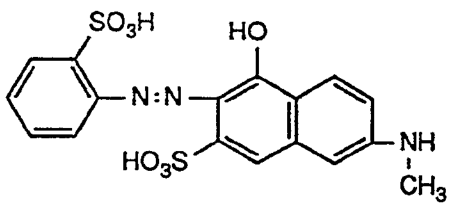 | goldgelb |
| 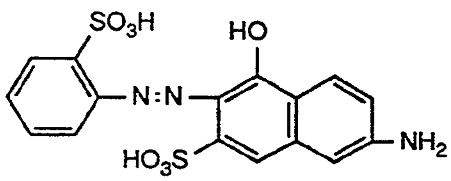 | goldgelb |
| 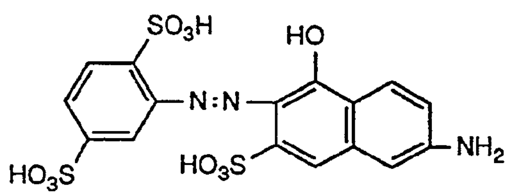 | orange |
| 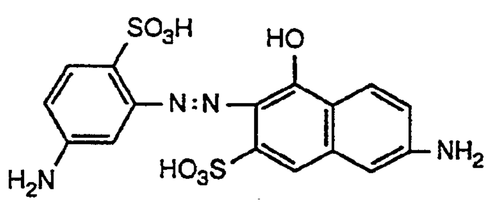 | orange |

| I | II |
|---|---|
| 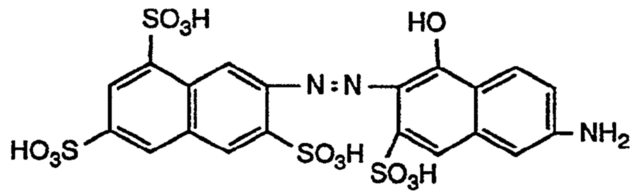 | orange |
| 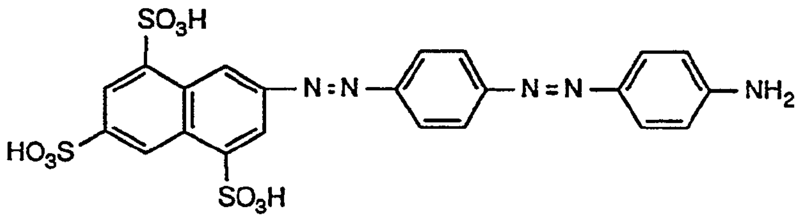 | orange |
| 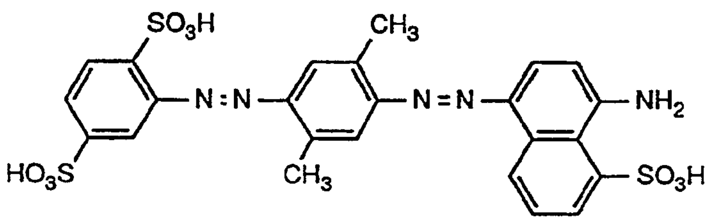 | orange |
| 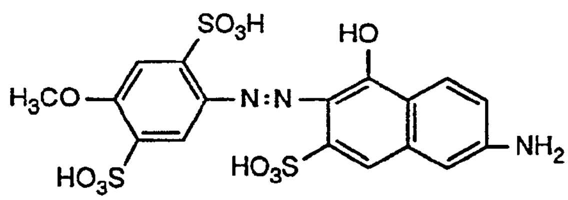 | scharlach |
| 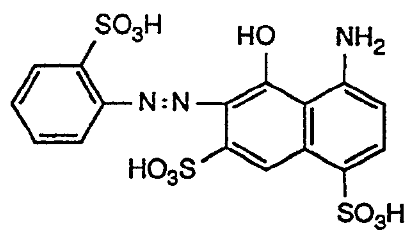 | scharlach |

| I | II |
|---|---|
| 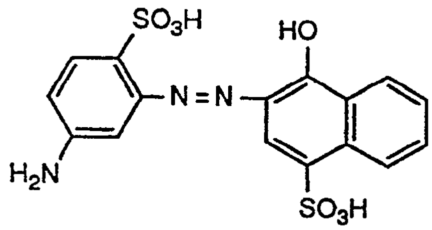 | scharlach |
| 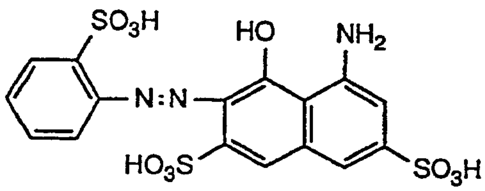 | gelbstichig rot |
| 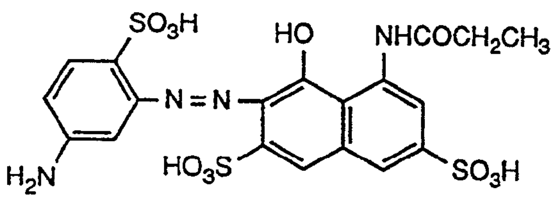 | gelbstichig rot |
| 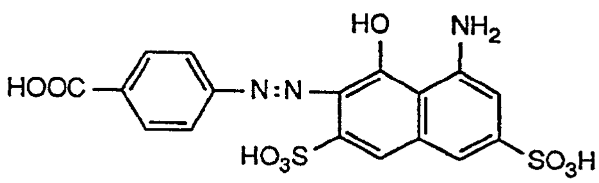 | gelbstichig rot |
| 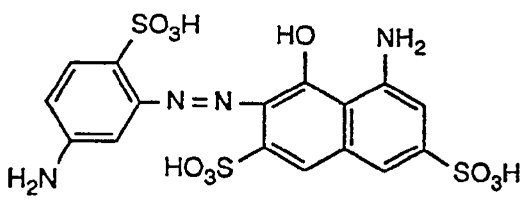 | rot |
| 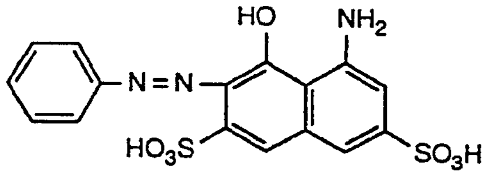 | rot |

| I | II |
|---|---|
| 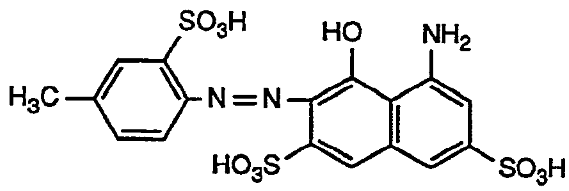 | rot |
| 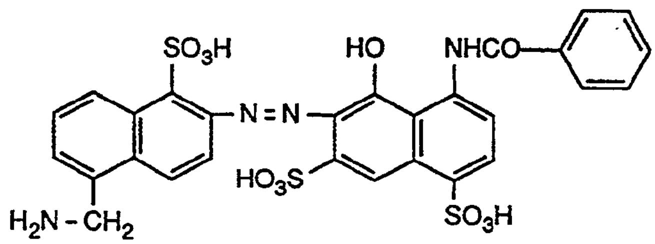 | blaustichig rot |
| 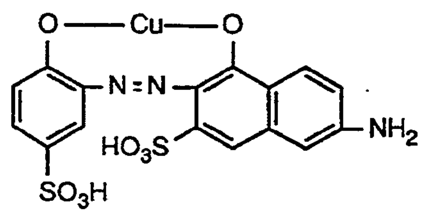 | rubin |
| 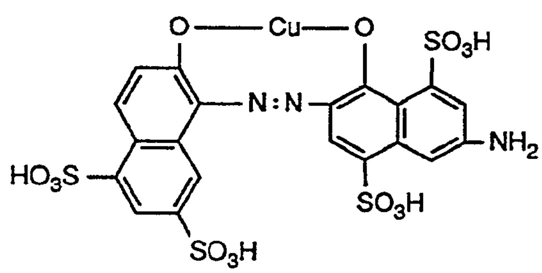 | violett |
| 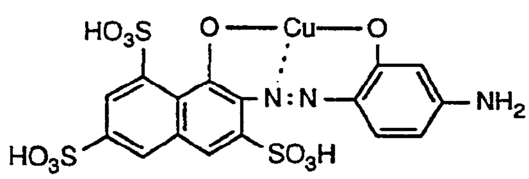 | violett |
| 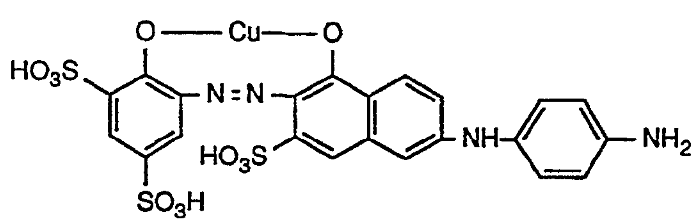 | violett |

| I | II |
|---|---|
| 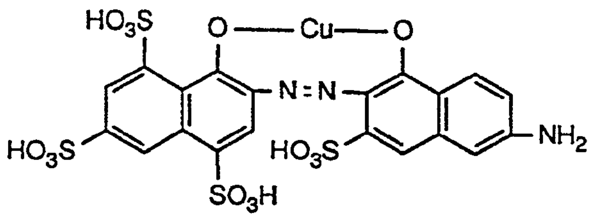 | violett |
| 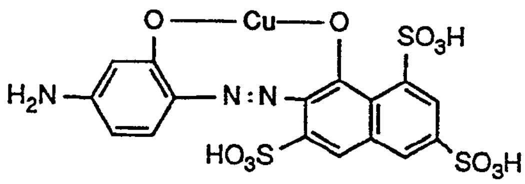 | violett |
| 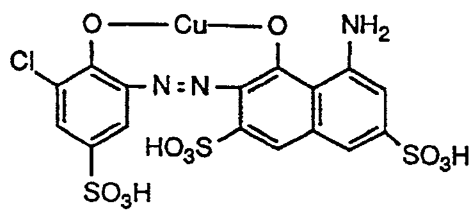 | violett |
| 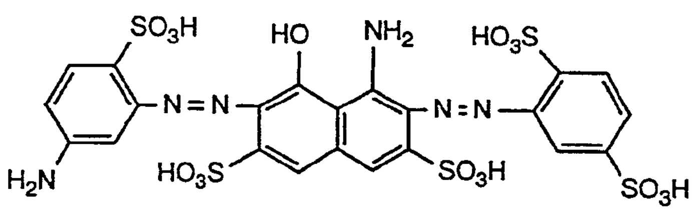 | marineblau |
| 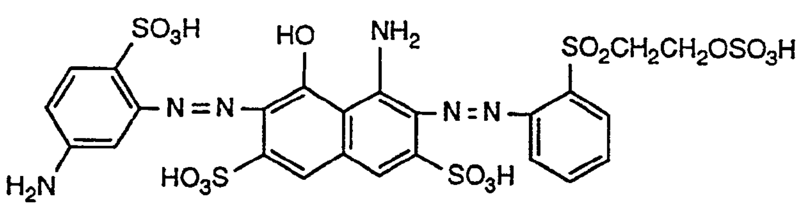 | marineblau |
| 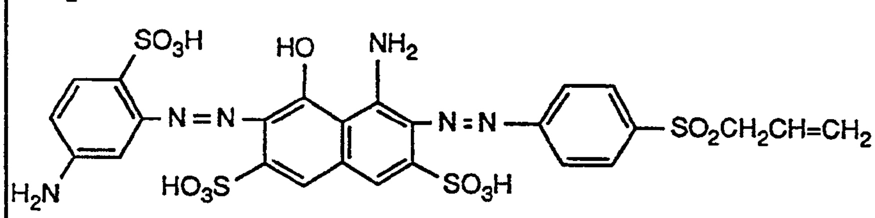 | marineblau |

| I | II |
|---|---|
| 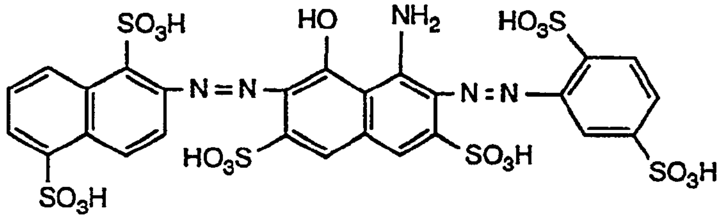 | marineblau |
| 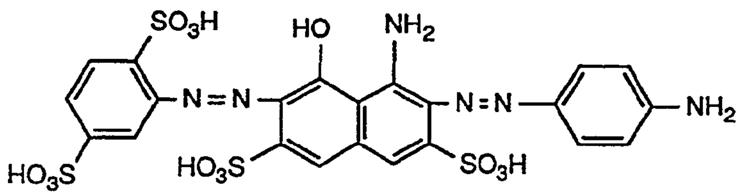 | marineblau |
| 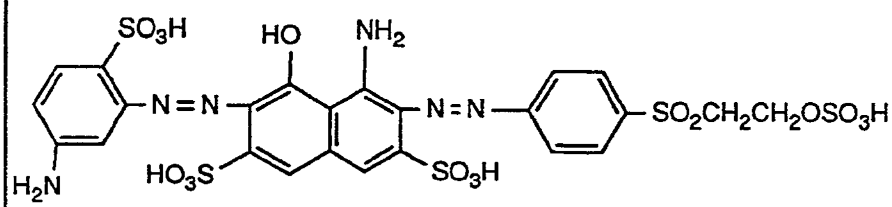 | marineblau |
| 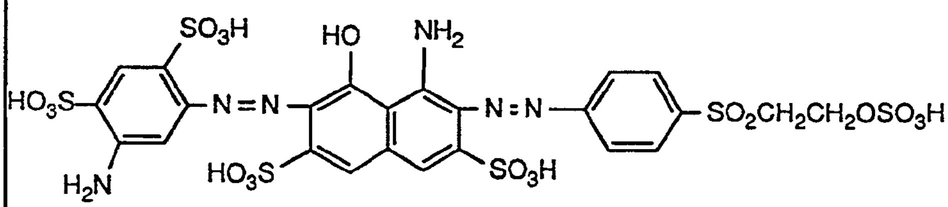 | marineblau |
| 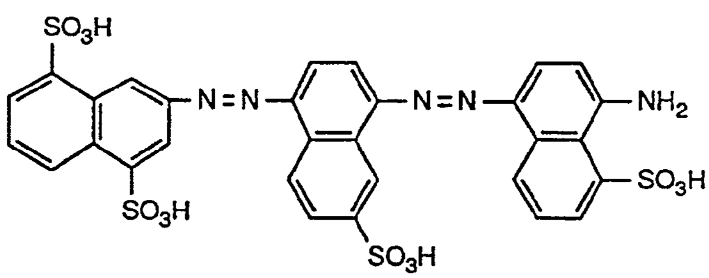 | braun |

| I | II |
|---|---|
| 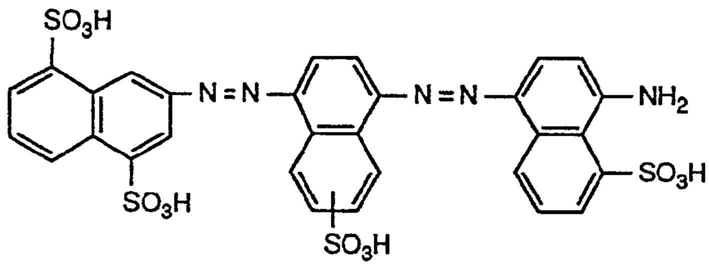 | braun |
| 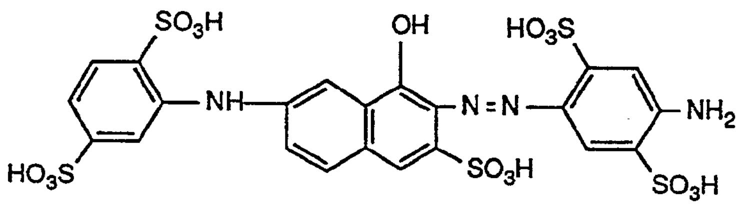 | braun |
| 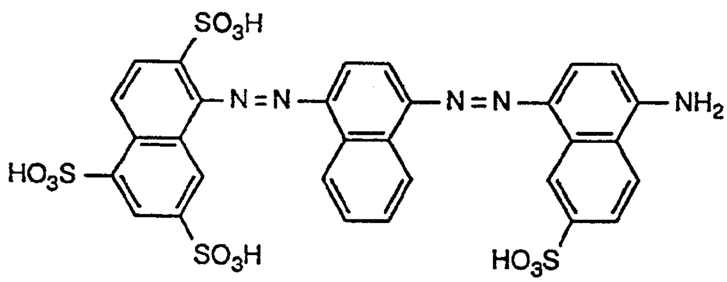 | braun |
| 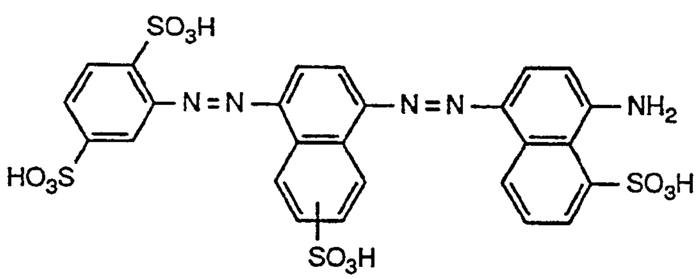 | braun |
| 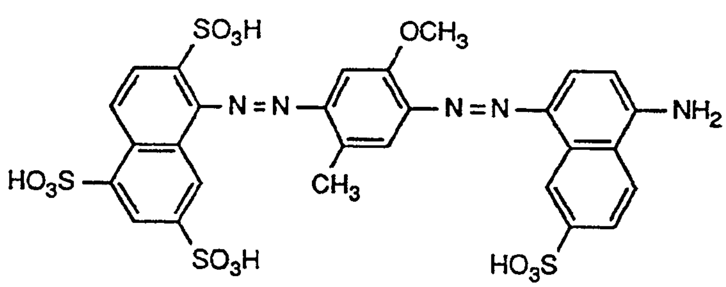 | braun |

| I | II |
|---|---|
| 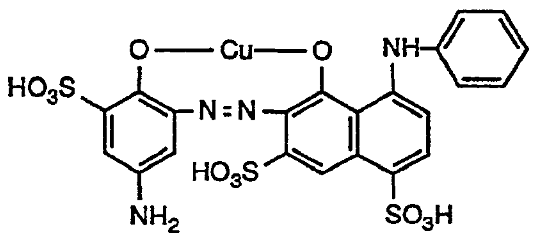 | marineblau |
| 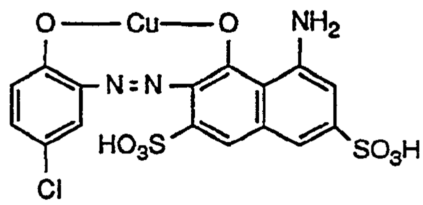 | marineblau |
| 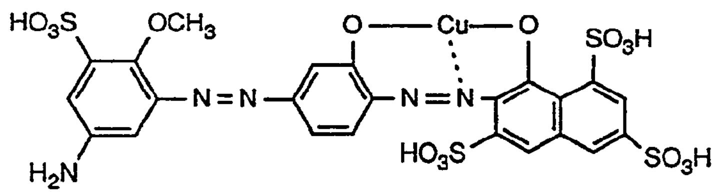 | marineblau |
| 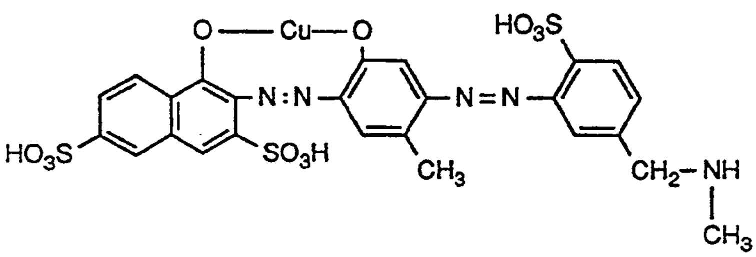 | marineblau |
| 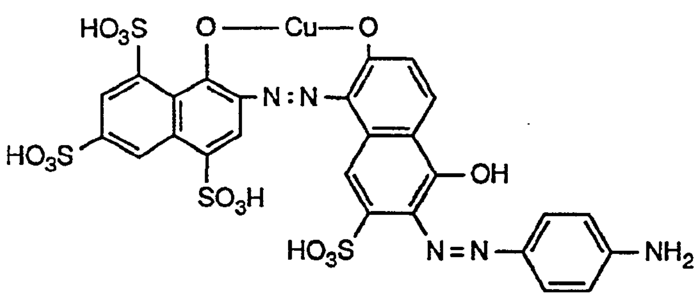 | marineblau |

| I | II |
|---|---|
| 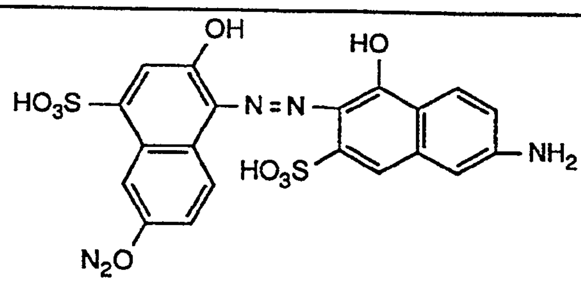 $^{1}/_{2}$ Cr - $^{1}/_{3}$Co-Mischkomplex | marineblau |
| 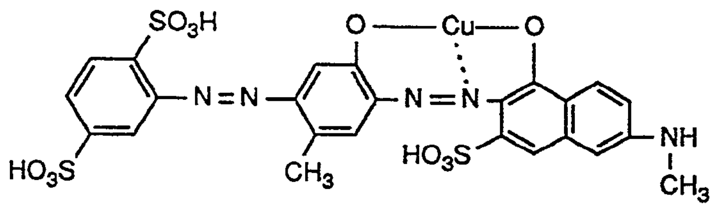 | marineblau |
| 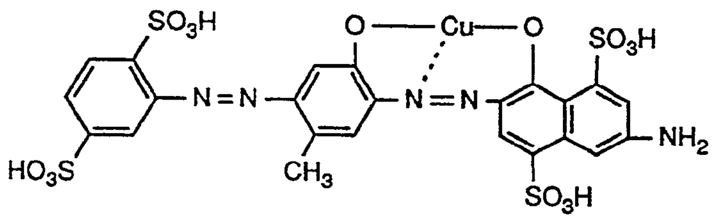 | blau |
| 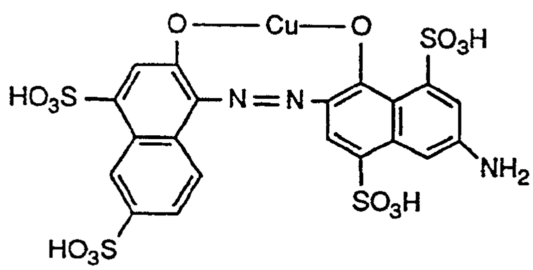 | blau |
| 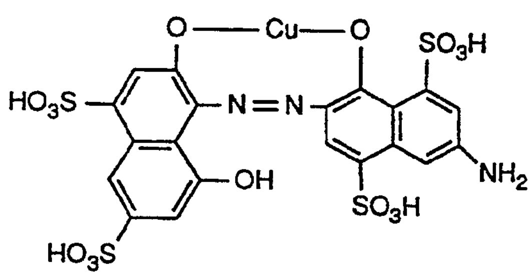 | blau |

| I | II |
|---|---|
| 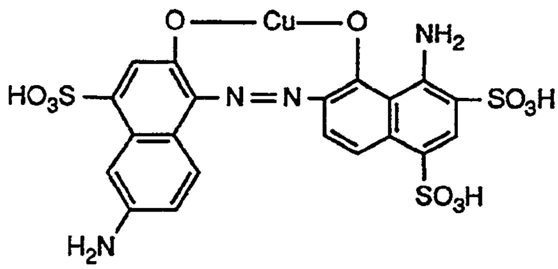 | blau |
| 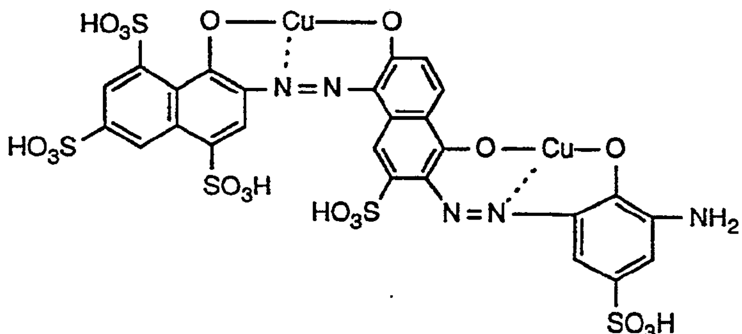 | blau |
| 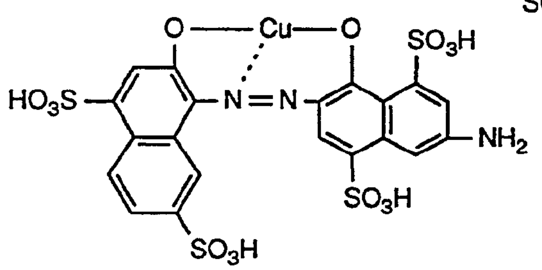 | blau |
| 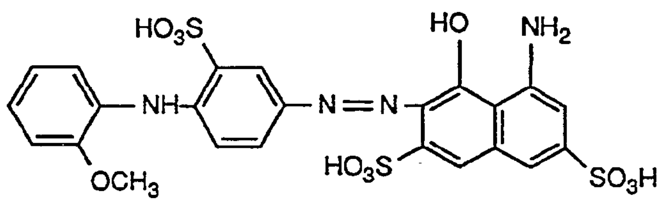 | blau |
| 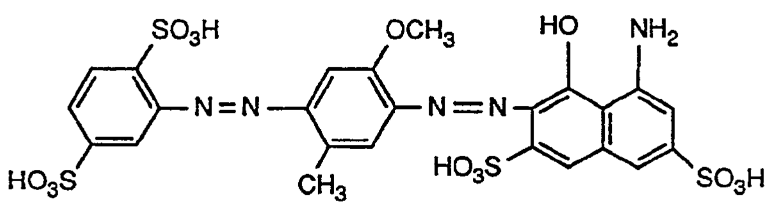 | marineblau |

| I | II |
|---|---|
| 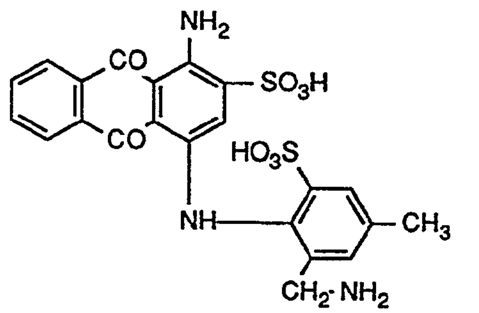 | blau |
| 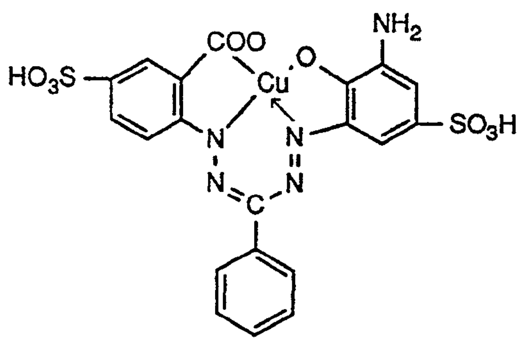 | blau |
| 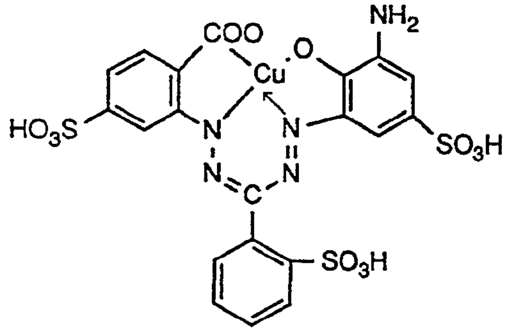 | blau |
| 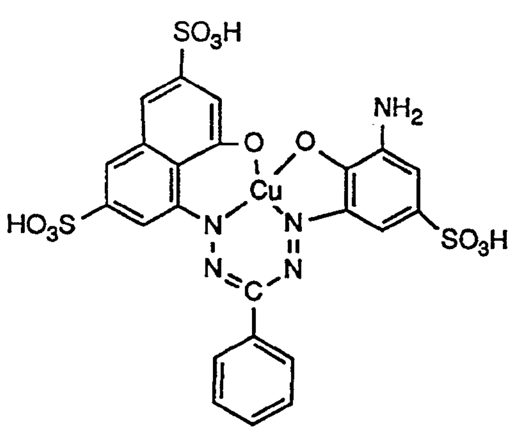 | blau |

| I | II |
|---|---|
| 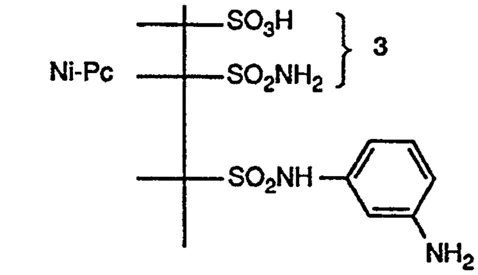 | grün |
| 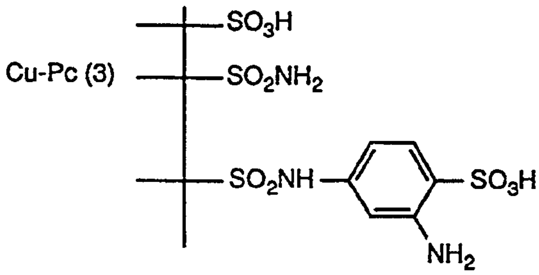 | türkis |
| 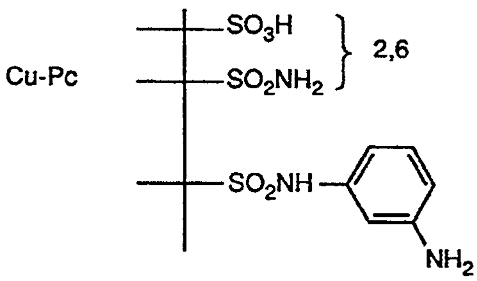 | türkis |
| 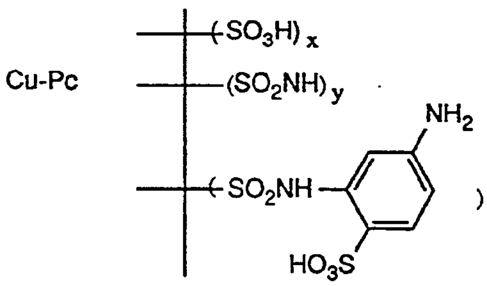 x+y+z=3 oder 4 | türkis |
| 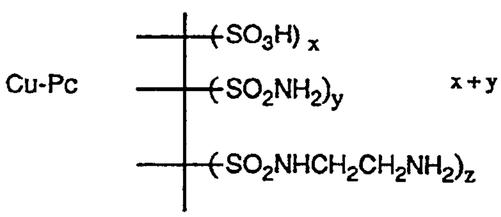 x+y+z=3 oder 4 | türkis |

| I | II |
|---|---|
| 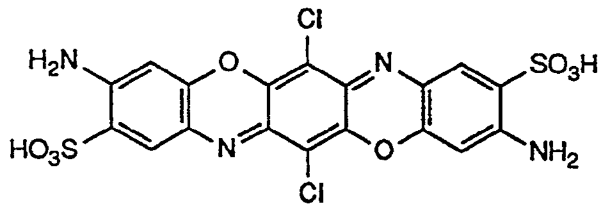 | blau |
| 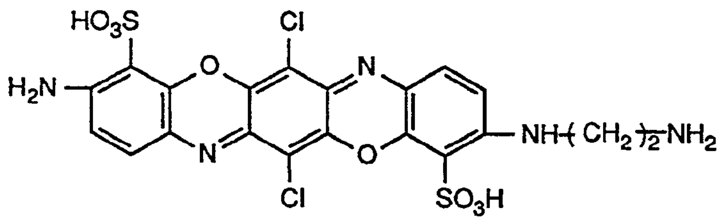 | blau |
| 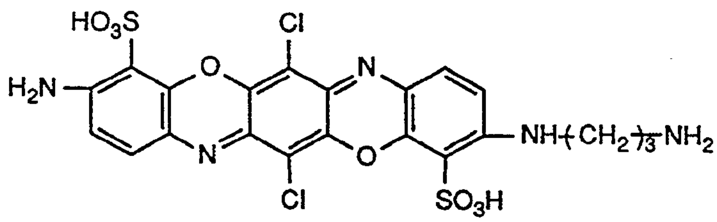 | blau |
| 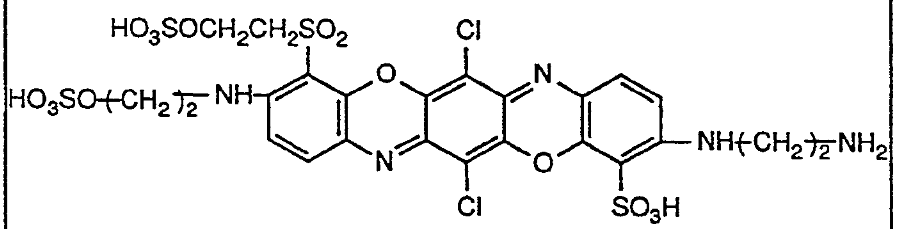 | blau |
| 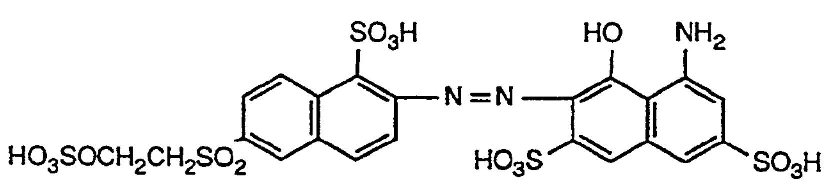 | rot |

| I | II |
|---|---|
| 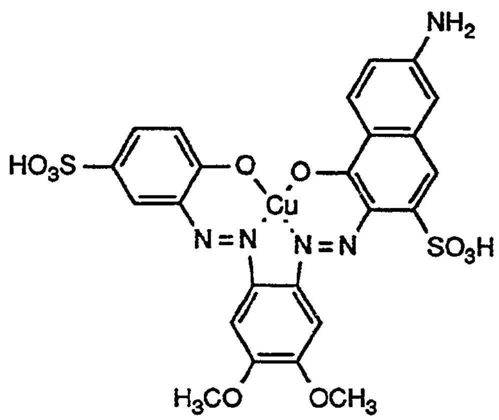 | oliv |
| 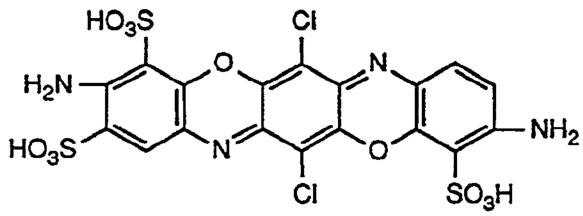 | blau |
| 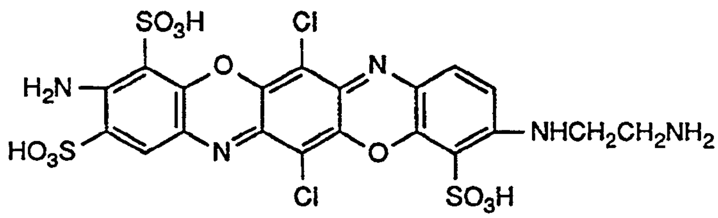 | blau |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalzinierte Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nicht-ionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

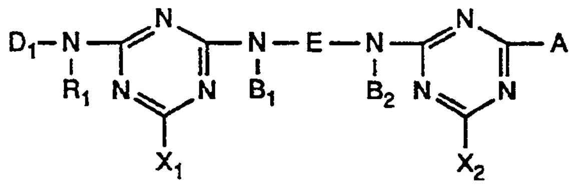 (1),

worin $D_1$ der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $R_1$, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; $X_1$ und $X_2$ unabhängig voneinander Fluor, Chlor, Brom, Sulfo, $C_1$-$C_4$-Alkylsulfonyl, Phenylsulfonyl oder Carboxypyridinium, E ein Rest der Formel

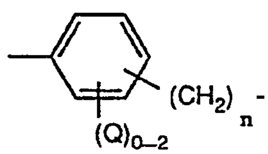 (1a) oder 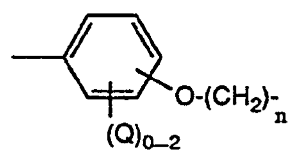 (1b)

und n die Zahl 1, 2, 3, 4 oder 5 ist, $(Q)_{0-2}$ für 0 bis 2 Substituenten Q, unabhängig voneinander, aus der Gruppe $C_1$-$C_4$-Alkyl, $C_1$-$C_4$-Alkoxy, Halogen, Carboxy und Sulfo steht, und A ein Rest der Formel

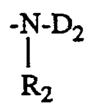 (1c)

ist, worin $D_2$ und $R_2$ die gleichen Bedeutungen wie $D_1$ und $R_1$, unabhängig von diesen, haben, oder ein Rest der Formel

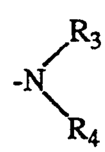 (1d)

ist, worin $R_3$ und $R_4$ unabhängig voneinander Wasserstoff, einen gegebenenfalls substituierten $C_1$-$C_8$-Alkyl-, $C_5$-$C_7$-Cycloalkyl-, Phenyl- oder Naphthyl-Rest oder einen 5-oder 6-gliedrigen heterocyclischen Rest bedeuten, oder $R_3$ und $R_4$ zusammen mit dem sie verbindenden Stickstoffatom, gegebenenfalls unter Einschluss eines weiteren Heteroatoms einen stickstoffhaltigen heterocyclischen Ring bilden.

2. Reaktivfarbstoffe gemäss Anspruch 1, worin $X_1$ und $X_2$ unabhängig voneinander Fluor, Chlor oder Carboxypyridinium, insbesondere Fluor oder Chlor ist.

3. Reaktivfarbstoffe gemäss einem der Ansprüche 1 und 2, worin $B_1$ und $B_2$ je ein Wasserstoffatom ist.

4. Reaktivfarbstoffe gemäss einem der Ansprüche 1 bis 3, worin E ein Rest der Formel (1a) oder (1b) ist, worin n die Zahl 1 oder 2 und Q Sulfo ist.

5. Reaktivfarbstoffe gemäss einem der Ansprüche 1 bis 4, worin A ein Rest der Formel (1c) ist.

6. Reaktivfarbstoffe gemäss Anspruch 5, worin $D_1$ die gleiche Bedeutung wie $D_2$ und $R_1$ die gleiche Bedeutung wie $R_2$ hat.

7. Reaktivfarbstoffe gemäss Anspruch 6, worin $D_1$ und $D_2$ je ein Azo-, Metallkomplexazo- oder Formazanfarbstoffrest ist.

8. Reaktivfarbstoffe gemäss Anspruch 7, worin $R_1$ und $R_2$ Wasserstoff, Methyl oder Ethyl ist.

9. Reaktivfarbstoffe gemäss einem der Ansprüche 1 bis 4, worin A ein Rest der Formel (1d) ist.

10. Reaktivfarbstoffe gemäss Anspruch 9, worin $R_3$ und $R_4$ unabhängig voneinander Wasserstoff oder $C_1$-$C_6$-Alkyl, das durch Hydroxy, $C_1$-$C_4$-Alkoxy, Hydroxy-$C_2$-$C_4$-alkoxy, $C_1$-$C_4$-Alkoxycarbonyl, $C_1$-$C_4$-Alkylcarbonyloxy, Carboxy, Cyan, Halogen, Sulfo oder Sulfato substituiert sein kann, bedeutet, oder worin $R_3$ Wasserstoff und $R_4$ Benzyl oder Phenethyl, das im Phenylring durch Sulfo substituiert sein kann, ist, oder worin $R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder worin $R_3$ Wasserstoff und $R_4$ Naphthyl, das durch Hydroxy oder Sulfo substituiert sein kann, ist, oder worin der Rest der Formel (1d) Morpholino, Piperidino oder Piperazino ist.

11. Reaktivfarbstoffe gemäss einem der Ansprüche 9 und 10, worin $D_1$ der Rest eines Azo-, Metallkomplexazo- oder Formazanfarbstoffes ist.

12. Reaktivfarbstoffe gemäss Anspruch 11, worin $R_1$ Wasserstoff, Methyl oder Ethyl ist.

13. Reaktivfarbstoffe gemäss einem der Ansprüche 1 bis 8 der Formel

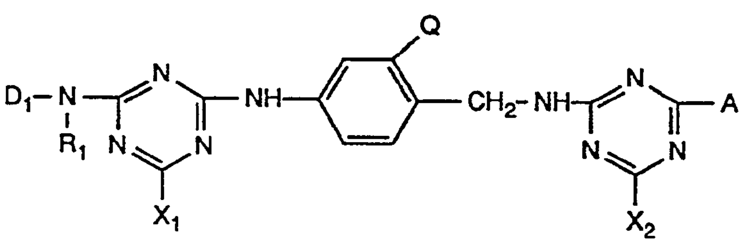

(2a)

oder

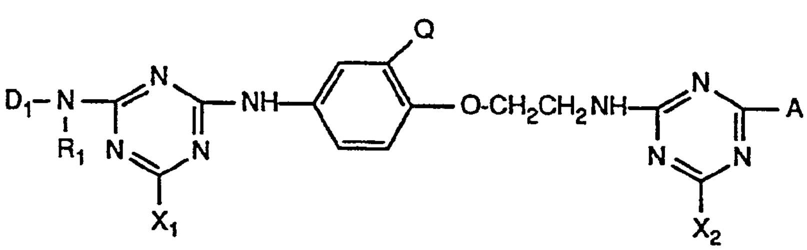

(2b)

worin A ein Rest der Formel

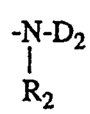

(1c),

$D_1$ und $D_2$ unabhängig voneinander je ein Rest eines Monoazo- oder Formazanfarbstoffes, $R_1$ und $R_2$ unabhängig voneinander Wasserstoff, Methyl oder Ethyl, $X_1$ und $X_2$ unabhängig voneinander Fluor oder Chlor und Q Wasserstoff oder Sulfo ist.

14. Reaktivfarbstoffe gemäss Anspruch 13, worin $D_1$ und $D_2$ identische Bedeutungen haben und $R_1$ und $R_2$ identische Bedeutungen haben.

15. Reaktivfarbstoffe gemäss einem der Ansprüche 1 bis 4 und 9 bis 12 der Formel

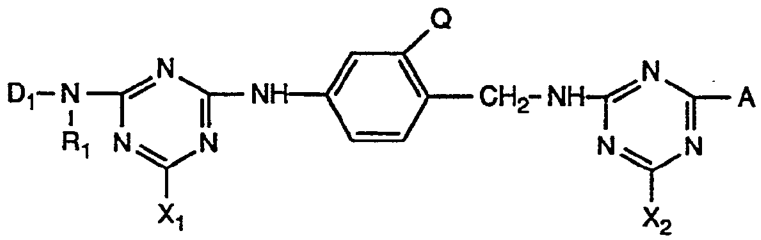

(2a),

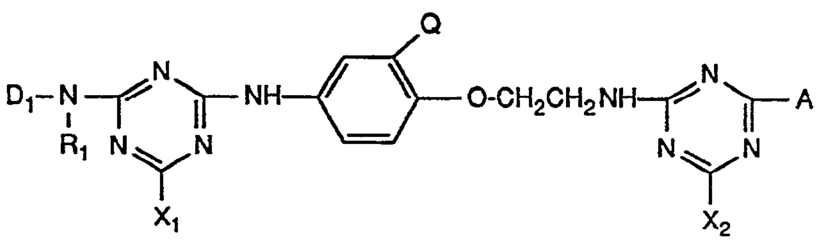

(2b) oder

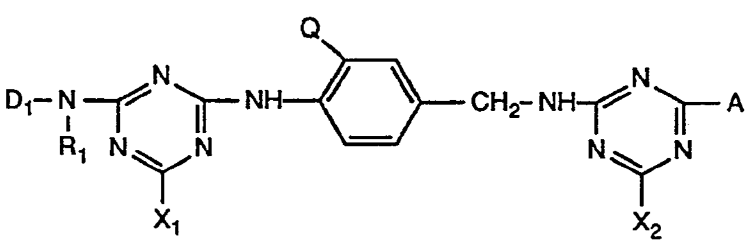

(2c),

worin $D_1$ der Rest eines Monoazo- oder Formazanfarbstoffes, $R_1$ Wasserstoff, Methyl oder Ethyl und A ein Rest der Formel

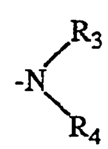

(1d),

worin $R_3$ und $R_4$ die in Anspruch 1 angegebenen Bedeutungen haben, ist, und $X_1$ und $X_2$ unabhängig voneinander Fluor oder Chlor und Q Wasserstoff oder Sulfo ist.

16. Reaktivfarbstoffe gemäss Anspruch 15, worin $R_3$ und $R_4$ unabhängig voneinander Wasserstoff oder $C_1$-$C_6$-Alkyl, das durch Hydroxy, $C_1$-$C_4$-Alkoxy, Hydroxy-$C_2$-$C_4$-alkoxy, $C_1$-$C_4$-Alkoxycarbonyl, $C_1$-$C_4$-Alkylcarbonyloxy, Carboxy, Cyan, Halogen, Sulfo oder Sulfato substituiert sein kann, bedeutet; oder worin $R_3$ Wasserstoff und $R_4$ Benzyl oder Phenethyl, das im Phenylring durch Sulfo substituiert sein kann, ist; oder worin $R_3$ Wasserstoff oder $C_1$-$C_4$-Alkyl, das durch Halogen, Hydroxy, Cyan, Carboxy, $C_1$-$C_4$-Alkoxy, Hydroxy-$C_2$-$C_4$-alkoxy, Sulfo oder Sulfato substituiert sein kann, und $R_4$ Phenyl, das durch $C_1$-$C_4$-Alkyl, $C_1$-$C_4$-Alkoxy, Halogen, Carboxy oder Sulfo substituiert sein kann, ist, oder worin $R_3$ Wasserstoff und $R_4$ Naphthyl, das durch Hydroxy oder Sulfo substituiert sein kann, ist; oder worin der Rest der Formel (1c) Morpholino, Piperidino oder Piperazino ist.

17. Verfahren zur Herstellung von Reaktivfarbstoffen der Formel (1) gemäss Anspruch 1, dadurch gekennzeichnet, dass man einen organischen Farbstoff der Formel

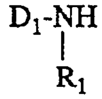 (30)

oder ein Farbstoffvorprodukt, je ein Äquivalent der s-Triazine der Formeln

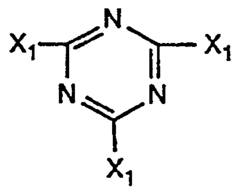 (31) und 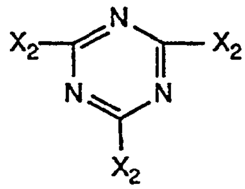 (32),

ein Äquivalent eines Diamins der Formel

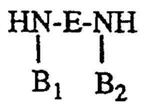 (33)

und ein Äquivalent eines Amins der Formel

H-A (34)

in beliebiger Reihenfolge miteinander umsetzt, wobei $D_1$, $R_1$, $X_1$, $X_2$, $B_1$, $B_2$, E und A die in Anspruch 1 angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

**18.** Verfahren gemäss Anspruch 17, dadurch gekennzeichnet, dass man einen organischen Farbstoff der Formel (30) zunächst mit einem s-Triazin der Formel (31) kondensiert, und die erhaltene Verbindung der Formel

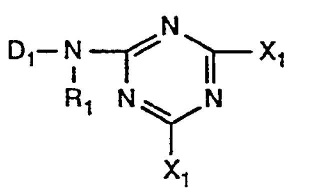 (35)

mit einem Diamin der Formel (33) kondensiert, anschliessend das Kondensationsprodukt mit einem s-Triazin der Formel (32) kondensiert, und zuletzt das Umsetzungsprodukt mit einem Amin der Formel (34) kondensiert.

**19.** Verfahren gemäss Anspruch 17, dadurch gekennzeichnet, dass man einen organischen Farbstoff der Formel (30) mit einem s-Triazin der Formel (31) kondensiert, die erhaltene Verbindung der Formel

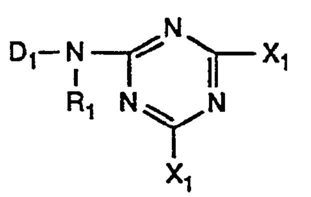 (35)

im molaren Verhältnis 2:1 mit einm Diamin der Formel (33) kondensiert, so dass ein Farbstoff der Formel (1) erhalten wird, worin $X_1$ die gleiche Bedeutung wie $X_2$ hat, A ein Rest der Formel (1c) ist, und $D_1$ die gleiche Bedeutung wie $D_2$ hat und $R_1$ die gleiche Bedeutung wie $R_2$ hat.

**20.** Verfahren gemäss Anspruch 17, dadurch gekennzeichnet, dass man eine Komponente des Farbstoffes der Formel (30), die einen Rest der Formel

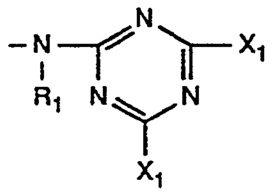

(36)

enthält, mit einer zur Herstellung des Farbstoffes benötigten zweiten Komponente umsetzt, und den so erhaltenen Farbstoff der Formel

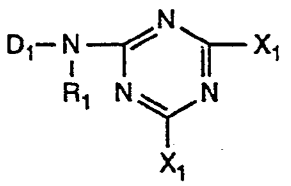

(35)

mit einem Diamin der Formel (33), einem weiteren s-Triazin der Formel (32) und einem Amin der Formel (34) umsetzt.

**21.** Verwendung der Reaktivfarbstoffe gemäss Anspruch 1, zum Färben oder Bedrucken von cellulosehaltigen Fasermaterialien.

**22.** Verwendung gemäss Anspruch 21, zum Färben oder Bedrucken von Baumwolle.